# EUROPEAN PATENT SPECIFICATION

(11) **EP 2 554 608 B1**
(45) Date of publication and mention of the grant of the patent: **26.12.2018**
(21) Application number: 11762853.7
(22) Date of filing: 29.03.2011
(51) Int. Cl.: C09D 11/037, C09D 17/00, C09D 5/08, C09D 5/38, C09D 7/63, C09C 1/62, C09C 3/08, C09C 3/12, C09D 11/00

(54) **METALLIC PIGMENT COMPOSITION**
METALLPIGMENTZUSAMMENSETZUNG
COMPOSITION DE PIGMENTS MÉTALLIQUES

(30) Priority: 13.07.2010 JP 2010158497; 30.03.2010 JP 2010077676
(43) Date of publication of application: 06.02.2013
(73) Proprietor: ASAHI KASEI KABUSHIKI KAISHA, Chiyoda-ku Tokyo (JP)
(72) Inventor: NAKAJIMA Kazuko, Tokyo 101-8101 (JP); UEYANAGI Kaoru, Tokyo 101-8101 (JP)
(74) Representative: Strehl Schübel-Hopf & Partner
(86) International application number: PCT/JP2011/057829
(87) International publication number: WO 2011/122629

(56) References cited:
- EP-A1- 1 990 377
- EP-A1- 2 143 765
- WO-A1-2004/096921
- WO-A1-2008/139917
- JP-A- 2003 147 226
- JP-A- 2004 124 069
- JP-A- 2004 131 542
- JP-A- 2007 169 613
- JP-A- 2008 120 901
- JP-A- 2008 120 932
- JP-A- 2009 275 095
- JP-A- 2009 275 096
- US-A1- 2010 000 445
- DATABASE WPI Week 200980 Thomson Scientific, London, GB; AN 2009-R56654 XP002706358, & JP 2009 275096 A (ASAHI KASEI KK) 26 November 2009 (2009-11-26)
- DATABASE WPI Week 200427 Thomson Scientific, London, GB; AN 2004-285958 XP002706359, & JP 2003 147226 A (TOYO ALUMINIUM KK) 21 May 2003 (2003-05-21)

## Description

### Technical Field

The present invention relates to a metallic pigment composition suitable for coating compositions, ink compositions or the like, in particular, water-based coatings, water-based inks or the like.

### Background Art

Conventionally, metallic pigments have been used for metallic paints and printing inks, for kneading into plastic, and so on for the purpose of achieving a decorative effect with a focus on metallic feeling.

Recently, in the field of coatings, in view of resource saving and anti-pollution, there has been an increasing need for conversion to water-based coatings in which the amount of an organic solvent used is small, but there are still few examples of water-based coatings which are practicable in metallic coatings containing a metallic pigment. The reason for this is that metallic pigments are easily corroded in water-based coatings. In the case where metal powders are present in water-based coatings, the metal powders are corroded by water in an acidic, neutral or basic region, or in multiple regions of them depending on the nature of each metal, thereby generating a hydrogen gas. This is an extremely serious safety problem during production processes of coatings and inks in paint manufacturers and ink manufacturers as well as during processes of coatings and prints in automobile manufacturers, home appliance manufacturers and printing companies. The corrosion resistance of metallic pigments in water, water-based coatings or water-based inks is, hereinafter, referred to as "storage stability".

Patent Document 1 discloses an aluminum pigment having an inorganic molybdenum coating film, and also a coating film made of amorphous silica, which covers the inorganic molybdenum coating film. In addition, Patent Document 2 discloses an aluminum pigment having an inorganic molybdenum coating film and also a coating film made of amorphous silica and/or a coating film formed from a silane coupling agent, which covers the inorganic molybdenum coating film. However, in any of these patent documents, the deterioration in color tone of the metallic pigment is not avoidable, and the processes therein are also complicated.

Patent Document 3 discloses a metallic pigment containing an amine salt of molybdic acid in order to simultaneously achieve storage stability as well as adhesion and chemical resistance in water-based coatings or water-based inks. However, the method disclosed in this document is insufficient in storage stability. In addition, in any methods, there is a disadvantage that a dye or an organic pigment in coatings is partially discolored in the case where it is blended with the coatings.

Furthermore, in some applications, a coating film obtained by using the metallic pigment is often required to have adhesion and chemical resistance such as acid resistance or alkali resistance.

### Citation List

### Patent Literature

Patent Document 1: JP 2003-147226 A
Patent Document 2: WO 2004/096921
Patent Document 3: JP 2007-169613 A

EP 2 143 765 A1 discloses a metallic pigment composition comprising an organic molybdenum compound formed as a film on a surface of an aluminum pigment.

US 2010/0000445 A1 discloses a metal pigment composition containing an aluminum or metal pigment treated with an organic molybdenum compound.

### Summary of Invention

### Technical Problem

An object of the present invention is to provide a metallic pigment composition that has overcome the above disadvantages of the prior art, namely to provide a metallic pigment composition that can be used in painting compositions, ink compositions or the like, in particular, water-based coatings, water-based inks or the like, that is excellent in storage stability of coatings, that has performances excellent in photoluminescence, hiding power, flip-flop feeling and the like when forming a coating film, and that does not allow a dye or an organic pigment to discolor.

Another object is to provide a metallic pigment composition that is excellent in adhesion and chemical resistance when forming a coating film, in addition to the above performances.

### Solution to Problem

The present inventors have found that the above problems are solved by using a metallic pigment composition containing: an organic molybdenum compound; a hydrolysate of a silicon-containing compound and/or a condensate thereof; and metallic particles, thereby achieving the present invention.

Namely, the present invention is as follows.
(1) A metallic pigment composition comprising one or more organic molybdenum compounds, a hydrolysate of a silicon-containing compound and/or a condensate thereof, and metallic particles, and-further comprising at least one selected from the group consisting of:
   (i) an organic oligomer or polymer obtained by polymerizing
      (a) at least one selected from the group consisting of radical and/or ionic polymerizable unsaturated carboxylic acid; a compound having a radical and/or ionic polymerizable double bond and an isocyanate group; a compound having a radical and/or ionic polymerizable double bond and an epoxy group; a compound having a radical and/or ionic polymerizable double bond and an amino group; a compound having a radical and/or ionic polymerizable double bond and a hydrolyzable silyl group; a compound having a radical and/or ionic polymerizable double bond and a sulfone group; a compound having a radical and/or ionic polymerizable double bond and a hydroxyl group with
      (b) at least one monomer having at least two radical and/or ionic polymerizable double bonds in one molecule; and
   (ii) inorganic phosphoric acids or salts thereof,
   wherein the silicon-containing compound is at least one selected from compounds represented by the following general formula (4), (6) or (7):
   [Formula 4]

   R6ₘSi(OR7)₄₋ₘ (4)

   wherein R6 is a hydrogen atom or a hydrocarbon group having 1 to 30 carbon atoms that may optionally contain a halogen group, and R7 is a hydrogen atom or a hydrocarbon group having 1 to 8 carbon atoms, R6 and R7 may be the same or different, wherein when the numbers of R6 and R7 are each two or more, each of R6 and R7 may be all the same, may be partially the same, or may be all different, and 1 ≤ m ≤ 3;
   [Formula 6]

   Si(OR11)₄ (6)

   wherein R11 is each a hydrogen atom or a hydrocarbon group having 1 to 8 carbon atoms, and R11 may be all the same, may be partially the same, or may be all different; and
   [Formula 7]

   R12ᵣSiCl₄₋ᵣ (7)

   wherein R12 is a hydrogen atom or a hydrocarbon group having 1 to 30 carbon atoms that may optionally contain a halogen group, wherein when the number of R12 is two or more, R12 may be all the same, may be partially the same, or may be all different, and 0 ≤ r ≤ 3.
(2) The metallic pigment composition according to (1), wherein the metallic particles are made of aluminum.
(3) The metallic pigment composition according to (1) or (2), wherein the organic molybdenum compound is at least one selected from organic amine salts of molybdic acid, compounds represented by the following general formula (1), and compounds represented by the following general formula (2): 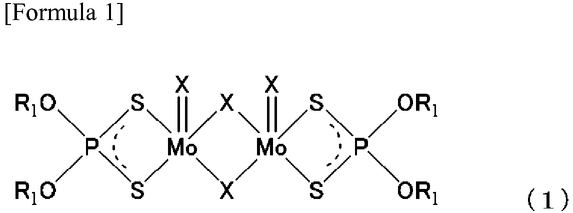 wherein R1 is each an organic group having 1 to 24 carbon atoms and may be the same or different, and X is S or O; and 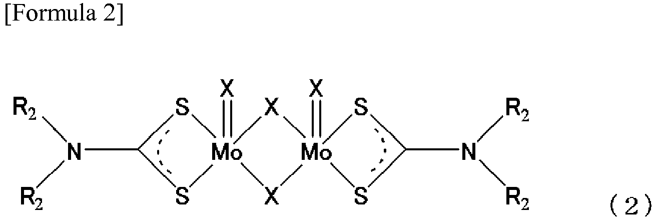 wherein R2 is each an organic group having 1 to 24 carbon atoms and may be the same or different, and X is S or O.
(4) The metallic pigment composition according to (3), wherein an amine in the organic amine salt of molybdic acid is at least one selected from amine compounds represented by the following general formula (3): 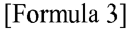 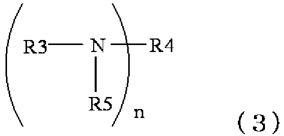 wherein R3, R4 and R5 may be the same or different, and are each a hydrogen atom, or a mono or divalent hydrocarbon group having 1 to 30 carbon atoms that may optionally contain an ether bond, an ester bond, a hydroxyl group, a carbonyl group, and a thiol group, wherein R3 and R4 are optionally taken together to form a 5-membered or 6-membered cycloalkyl group, R3 and R4 are optionally taken together with a nitrogen atom to form a 5-membered or 6-membered ring that is capable of additionally containing a nitrogen or oxygen atom as a crosslinking member, or R3, R4 and R5 are optionally taken together to form a multi-membered multiring that is capable of containing one or more additional nitrogen atoms and/or oxygen atoms as a crosslinking member, R3, R4 and R5 are not a hydrogen atom at the same time, and n represents a numerical value of 1 to 2.
(5) The metallic pigment composition according to any one of (1) to (4), wherein the inorganic phosphoric acids are at least one selected from orthophosphoric acids, metaphosphoric acids, pyrophosphoric acids, triphosphoric acids, tetraphosphoric acids, and phosphorous acids.
(6) The metallic pigment composition according to any one of (1) to (4), wherein the inorganic phosphoric acid salts are salts of the inorganic phosphoric acids with at least one selected from alkali metals, alkaline earth metals, ammonia, and amines represented by the following general formula (8): 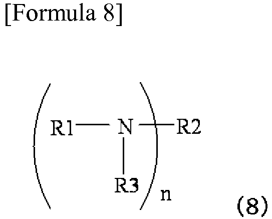 wherein R1, R2 and R3 may be the same or different, and are each a hydrogen atom, or a mono or divalent hydrocarbon group having 1 to 30 carbon atoms that may optionally contain an ether bond, an ester bond, a hydroxyl group, a carbonyl group, and a thiol group, wherein R1 and R2 are optionally taken together to form a 5-membered or 6-membered cycloalkyl group, R1 and R2 are optionally taken together with a nitrogen atom to form a 5-membered or 6-membered ring that is capable of additionally containing a nitrogen or oxygen atom as a crosslinking member, or R1, R2 and R3 are optionally taken together to form a multi-membered multiring that is capable of containing one or more additional nitrogen atoms and/or oxygen atoms as a crosslinking member, R1, R2 and R3 are not a hydrogen atom at the same time, and n represents a numerical value of 1 to 2.
(7) The metallic pigment composition according to any one of (1) to (6), wherein the organic molybdenum compound is present in an amount of 0.01 to 10 parts by weight based on 100 parts by weight of the metallic particles.
(8) The metallic pigment composition according to any one of (1) to (7), wherein the hydrolysate of a silicon-containing compound and/or the condensate thereof is present in an amount of 0.01 to 50 parts by weight based on 100 parts by weight of the metallic particles.
(9) The metallic pigment composition according to any one of (1) to (8), wherein the organic oligomer or polymer is present in an amount of 0.01 to 50 parts by weight based on 100 parts by weight of the metallic particles.
(10) A coating composition comprising the metallic pigment composition according to any one of (1) to (9).
(11) An ink composition comprising the metallic pigment composition according to any one of (1) to (9).
(12) An article comprising a coating film formed by the coating composition according to (10) or being coated with the coating composition according to (10).
(13) A printed material formed by the ink composition according to (11).

### Advantageous Effects of Invention

In the case where the metallic pigment composition of the present invention is used in coating compositions, ink compositions or the like, in particular water-based coatings, water-based inks or the like, a metallic pigment composition can be obtained that is excellent in storage stability, and excellent in photoluminescence, hiding power, flip-flop feeling and the like when forming a coating film, and that does not allow a dye or an organic pigment to discolor. A metallic pigment composition can also be obtained that is excellent in adhesion and chemical resistance when forming a coating film, in addition to the above performances.

### Description of Embodiments

Hereinafter, the present invention will be described in detail with reference to, in particular, preferable aspects of the present invention.

As metallic particles for use in the present invention, particles of base metals such as aluminum, zinc, iron, magnesium, copper and nickel, and particles of alloys thereof can be preferably used.

With respect to the shape thereof, the average particle diameter (d50) is 2 to 40 µm, the average thickness (t) is preferably in a range of 0.001 to 10 µm and further preferably in a range of 0.01 to 10 µm, and the average aspect ratio is preferably in a range of 1 to 2500. Herein, the average aspect ratio means a value obtained by dividing the average particle diameter (d50) of the metallic particles by the average thickness (t).

In the case where the metallic particles are used as a pigment, scale-like particles are preferable.

Particularly suitable are aluminum flakes frequently used as a pigment for metallic coatings. As aluminum flakes for use in the present invention, suitable are those having surface texture, particle diameter and shape which are demanded for the pigment for metallic coatings, such as surface glossiness, whiteness and photoluminescence.

Aluminum flakes are usually commercially available in the state of a paste, and may be used as they are or may be used after fatty acid and the like on the surface thereof are removed by an organic solvent and the like. So-called aluminum-deposited foils can also be used in which the average particle diameter (d50) is 3 to 30 µm and the average thickness (t) is 5 to 50 nm.

An organic molybdenum compound for use in the present invention is typified by, for example, one used as a lubricant additive. A particularly suitable compound is an organic amine salt of molybdic acid.

An amine of the organic amine salt of molybdic acid for use in the present invention is represented by the following general formula (3): 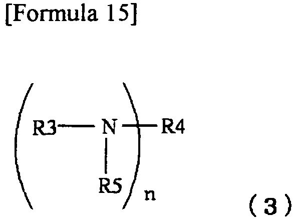 (wherein R3, R4 and R5 may be the same or different, and are each a hydrogen atom, or a mono or divalent hydrocarbon group having 1 to 30 carbon atoms that may optionally contain an ether bond, an ester bond, a hydroxyl group, a carbonyl group, and a thiol group, wherein R3 and R4 are optionally taken together to form a 5-membered or 6-membered cycloalkyl group, R3 and R4 are optionally taken together with a nitrogen atom to form a 5-membered or 6-membered ring that is capable of additionally containing a nitrogen or oxygen atom as a crosslinking member, or R3, R4 and R5 are optionally taken together to form a multi-membered multiring composition that is capable of containing one or more additional nitrogen atoms and/or oxygen atoms as a crosslinking member. R3, R4 and R5 are not a hydrogen atom at the same time. n represents a numerical value of 1 to 2.)

Specific examples include straight primary amines such as ethylamine, propylamine, butylamine, hexylamine, octylamine, laurylamine, tridecylamine and stearylamine; branched primary amines such as isopropylamine, isobutylamine, 2-ethylhexylamine and branched tridecylamine; straight secondary amines such as dimethylamine, diethylamine, dipropylamine, dibutylamine, dihexylamine, dioctylamine, dilaurylamine, ditridecylamine and distearylamine; branched secondary amines such as diisopropylamine, diisobutylamine, di-2-ethylhexylamine and dibranched tridecylamine; asymmetric secondary amines such as N-methylbutylamine, N-ethylbutylamine, N-ethylhexylamine, N-ethyllaurylamine, N-ethylstearylamine, N-isopropyloctylamine and N-isobutyl-2-ethylhexylamine; straight tertiary amines such as trimethylamine, triethylamine, tripropylamine, tributylamine, trioctylamine, trilaurylamine, tritridecylamine and tristearylamine; branched tertiary amines such as triisopropylamine, triisobutylamine, tri-2-ethylhexylamine and tribranched tridecylamine; tertiary amines having a mixed hydrocarbon group, such as N,N-dimethyloctylamine, N,N-dimethyllaurylamine, N,N-dimethylstearylamine and N,N-diethyllaurylamine; and additionally, amines having an alkenyl group, such as allylamine, diallylamine, triallylamine and N,N-dimethylallylamine; and alicyclic primary amines such as cyclohexylamine and 2-methylcyclohexylamine; primary amines having an aromatic ring substituent, such as aniline, benzylamine and 4-methylbenzylamine; alicyclic secondary amines such as N,N-dicyclohexylamine and N,N-di-2-methylcyclohexylamine; secondary amines having an aromatic ring substituent, such as dibenzylamine and N,N-di-4-methylbenzylamine; asymmetric secondary amines such as N-cyclohexyl-2-ethylhexylamine, N-cyclohexylbenzylamine, N-stearylbenzylamine and N-2-ethylhexylbenzylamine; alicyclic tertiary amines such as N,N-dimethylbenzylamine, N,N-dimethylcyclohexylamine and tricyclohexylamine; tertiary amines having an aromatic ring substituent, such as tribenzylamine and tri-4-methylbenzylamine; and 3-methoxypropylamine, 3-ethoxypropylamine, 3-butoxypropylamine, 3-decyloxypropylamine, 3-lauryloxypropylamine, monoethanolamine, diethanolamine, monoisopropanolamine, monopropanolamine, butanolamine, triethanolamine, N,N-dimethylethanolamine, N-methylethanolamine, N-methyldiethanolamine, N-ethylethanolamine, N-propylethanolamine, N-isopropylethanolamine, N-butylethanolamine, N-cyclohexyl-N-methylaminoethanol, N-benzyl-N-propylaminoethanol, or N-hydroxyethylpyrrolidine, N-hydroxyethylpiperazine, morpholine, N-methylmorpholine, N-hydroxyethylmorpholine, ethylenediamine, 1,2-propanediamine, 1,3-propanediamine, N,N-dimethyl-1,3-propanediamine, N-cyclohexyl-1,3-propanediamine, N-decyl-1,3-propanediamine, N-isotridecyl-1,3-propanediamine, N,N-dimethylpiperazine, N-methoxyphenylpiperazine, N-methylpiperidine, N-ethylpiperidine, pyridine, methylpyridine, quinuclidine, diazabicyclo[2,2,2]octane, 1,8-diazabicyclo[5,4,0]-7-undecene, and the like, or mixtures thereof.

Among them, particularly preferable examples include stearylamine, di-2-ethylhexylamine, dioctylamine, straight or branched ditridecylamine, distearylamine, straight or branched tritridecylamine, tristearylamine, morpholine, 3-ethoxypropylamine, N,N-dimethylethanolamine, triethanolamine, and the like.

The organic molybdenum compound is represented by, for example, the following general formula (1) such as MoDTP (molybdenum dithiophosphates) of the following general formula (13), or represented by the following general formula (2) such as MoDTC (molybdenum dithiocarbamates) of the following general formula (14): 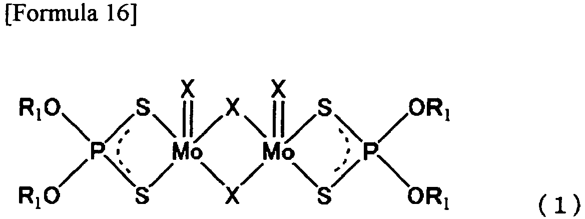 (wherein R1 is each an organic group having 1 to 24 carbon atoms and may be the same or different, and X is S or O.) 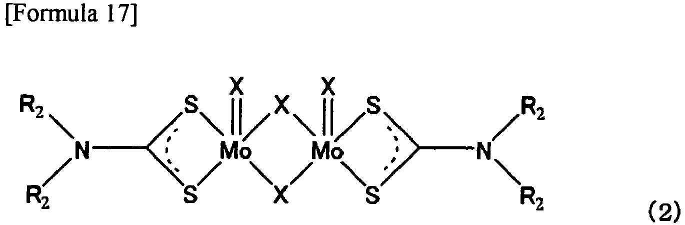 (wherein R2 is each an organic group having 1 to 24 carbon atoms and may be the same or different, and X is S or O.) 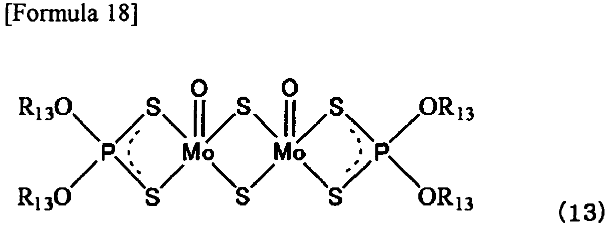 (wherein R13 are each an organic group having 1 to 24 carbon atoms and may be the same or different.) 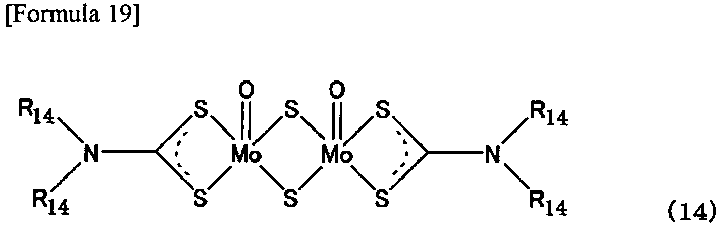 (wherein R14 is each an organic group having 1 to 24 carbon atoms and may be the same or different.).

Herein, the organic groups R1, R2, R13 and R14 in the formulas (1), (2), (13) and (14) are each preferably a hydrocarbon group, and the hydrocarbon group can optionally contain a hydroxyl group, an aldehyde group, a carbonyl group, a carboxyl group, an ether bond, a thioether bond, an ester bond, and the like. In particular, preferable is a combination of the organic amine salt of molybdic acid with MoDTC wherein R14 is each a hydrocarbon group having 1 to 24 carbon atoms.

As the compounds represented by the formulas (13) and (14), MoDTP (produced by Adeka Corporation, trade name "Adeka Sakura-lube 300"), MoDTC (produced by Adeka Corporation, trade name "Adeka Sakura-lube 165") and the like can be used.

The organic molybdenum compound is preferably added in an amount of 0.01 to 10 parts by weight, and further preferably in an amount of 0.01 to 5 parts by weight, based on 100 parts by weight of the metallic particles.

The organic molybdenum compound for use in the present invention may be added at the time of pulverizing a raw material metal powder by a ball mill, may be mixed in a slurry in which a solvent is added to the metallic particles, or may be kneaded in a paste having a reduced amount of a solvent. The organic molybdenum compound may also be added to the metallic particles as it is, or may also be diluted by a solvent and added. In order to achieve a uniformly mixed state, the organic molybdenum compound is more preferably diluted by a solvent in advance and added. Examples of the solvent used in dilution include alcohols such as methanol, ethanol, isopropanol, butanol, octanol, propylene glycol monomethyl ether and ethylene glycol monobutyl ether; hydrocarbon solvents such as hexane, cyclohexane, methylcyclohexane, octane, isooctane, benzene, toluene, xylene, tetralin and decalin; industrial gasolines such as mineral spirit and solvent naphtha; esters such as ethyl acetate and butyl acetate; ketones such as methyl ethyl ketone, methyl isobutyl ketone and cyclohexane; mineral oils; and the like.

A silicon-containing compound for use in the present invention is selected from compounds represented by the following general formula (4), (6) or (7):
[Formula 20]

R6ₘSi(OR7)₄₋ₘ (4)

(wherein R6 is a hydrogen atom or a hydrocarbon group having 1 to 30 carbon atoms that may optionally contain a halogen group, and R7 is a hydrogen atom or a hydrocarbon group having 1 to 8 carbon atoms. R6 and R7 may be the same or different, wherein when the numbers of R6 and R7 are each two or more, two or more R6 may be all the same, may be partially the same, or may be all different, and two or more R7 may be all the same, may be partially the same, or may be all different; and 1 ≤ m ≤ 3.)
[Formula 22]

Si(OR11)₄ (6)

(wherein R11 is each a hydrogen atom or a hydrocarbon group having 1 to 8 carbon atoms, and four R11 may be all the same, may be partially the same, or may be all different.)
[Formula 23]

R12ᵣSiC1₄₋ᵣ (7)

(wherein R12 is a hydrogen atom or a hydrocarbon group having 1 to 30 carbon atoms that may optionally contain a halogen group, wherein when the number of R12 is two or more, R12 may be all the same, may be partially the same, or may be all different; and 0 ≤ r ≤ 3.).

The hydrocarbon group in R6 of the formula (4) includes methyl, ethyl, propyl, butyl, hexyl, octyl, decyl, dodecyl, oleyl, stearyl, cyclohexyl, phenyl, benzyl and naphthyl, wherein these may be branched or straight, and may contain a halogen group such as fluorine, chlorine and bromine. Among them, a hydrocarbon group having 1 to 18 carbon atoms is particularly preferable. When the number of R6 is two or more, R6 may be all the same, may be partially the same, or may be all different. The number of R6 in the molecule, in the formula (4), preferably satisfies the following: m = 1 to 3, and more preferably m = 1 or 2.

The hydrocarbon group in R7 of the formula (4) includes methyl, ethyl, propyl, butyl, hexyl, octyl, and the like, and these may be branched or straight. Among these hydrocarbon groups, methyl, ethyl, propyl and butyl are particularly preferable. When the number of R7 is two or more, R7 may be all the same, may be partially the same, or may be all different.

The silicon-containing compound in such a formula (4) includes methyltrimethoxysilane, methyltriethoxysilane, methyltributoxysilane, dimethyldimethoxysilane, dimethyldiethoxysilane, dimethyldibutoxysilane, trimethylmethoxysilane, trimethylethoxysilane, n-propyltrimethoxysilane, n-propyltriethoxysilane, n-propyltributoxysilane, butyltrimethoxysilane, butyltriethoxysilane, butyltributoxysilane, dibutyldimethoxysilane, dibutyldiethoxysilane, dibutyldibutoxysilane, isobutyltrimethoxysilane, isobutyltriethoxysilane, hexyltrimethoxysilane, hexyltriethoxysilane, dihexyldimethoxysilane, dihexyldiethoxysilane, octyltrimethoxysilane, octyltriethoxysilane, dioctyldimethoxysilane, dioctyldiethoxysilane, dioctylethoxybutoxysilane, decyltrimethoxysilane, decyltriethoxysilane, didecyldimethoxysilane, didecyldiethoxysilane, octadecyltrimethoxysilane, octadecyltriethoxysilane, dioctadecyldimethoxysilane, dioctadecyldiethoxysilane, phenyltrimethoxysilane, phenyltriethoxysilane, diphenyldimethoxysilane, diphenyldiethoxysilane, trifluoropropyltrimethoxysilane, heptadecafluorodecyltrimethoxysilane, tridecafluorooctyltrimethoxysilane, tridecafluorooctyltriethoxysilane, 3-chloropropyltrimethoxysilane, 3-chloropropyltriethoxysilane, 3-chloropropyltributoxysilane, and the like.

The hydrocarbon group in R11 of the formula (6) includes methyl, ethyl, propyl, butyl, hexyl, octyl, and the like, and these may be branched or straight. Among these hydrocarbon groups, methyl, ethyl, propyl and butyl are particularly preferable. Four R11 may be all the same, may be partially the same, or may be all different.

The silicon-containing compound in such a formula (6) includes tetramethoxysilane, tetraethoxysilane, tetraisopropoxysilane, tetrabutoxysilane, and the like. Among them, tetraethoxysilane is particularly preferable.

The hydrocarbon group in R12 of the formula (7) includes methyl, ethyl, propyl, butyl, hexyl, octyl, decyl, dodecyl, oleyl, stearyl, cyclohexyl, phenyl, benzyl, naphthyl, and the like, and these may be branched or straight, and may contain a halogen group such as fluorine, chlorine and bromine. Among them, a hydrocarbon group having 1 to 12 carbon atoms is particularly preferable. When the number of R12 is two or more, R12 may be all the same, may be partially the same, or may be all different. The number of R12 in the molecule, in the formula (7), preferably satisfies the following: r = 0 to 3, and more preferably r = 1 to 3.

The silicon-containing compound in such a formula (7) includes methyltrichlorosilane, dimethyldichlorosilane, trimethylchlorosilane, octyldimethylchlorosilane, phenyltrichlorosilane, vinyltrichlorosilane, tetrachlorosilane, and the like.

Each of the general formulas (4), (6) and (7) used in the present invention may be solely used, or two or more of them may be used in combination.

A hydrolysate of the silicon-containing compound and/or a condensation reaction product thereof is obtained by stirring and mixing the silicon-containing compound and an amount of water required for performing a hydrolysis reaction together with a hydrolysis catalyst. In that case, a hydrophilic solvent can also be used if necessary. The time for the hydrolysis reaction is adjusted depending on the type of the silicon-containing compound, the temperature at the time of hydrolysis, and the type and concentration of the hydrolysis catalyst.

Examples of the catalyst for the hydrolysis reaction of the silicon-containing compound and/or the condensation reaction thereof, that can be used, include inorganic acids such as hydrochloric acid, nitric acid, sulfuric acid and phosphoric acid; organic acids such as benzoic acid, acetic acid, chloroacetic acid, salicylic acid, oxalic acid, picric acid, phthalic acid and malonic acid; and phosphonic acids such as vinylphosphonic acid, 2-carboxyethanephosphonic acid, 2-aminoethanephosphonic acid and octanephosphonic acid; and the like. These hydrolysis catalysts may be used solely or in combinations of two or more thereof. Examples thereof also include inorganic alkalis such as ammonia, sodium hydroxide and potassium hydroxide; inorganic alkali salts such as ammonium carbonate, ammonium hydrogen carbonate, sodium carbonate and sodium hydrogen carbonate; amines such as monomethylamine, dimethylamine, trimethylamine, monoethylamine, diethylamine, triethylamine, monoethanolamine, diethanolamine, triethanolamine, N,N-dimethylethanolamine, ethylenediamine, pyridine, aniline, choline, tetramethylammonium hydroxide and guanidine; and salts of organic acid, such as ammonium formate, ammonium acetate, monomethylamine formate, dimethylamine acetate, pyridine lactate, guanidinoacetic acid and aniline acetate. These hydrolysis catalysts may be used singly or in combinations of two or more thereof.

As a raw material for the hydrolysis reaction of the silicon-containing compound and/or the condensation reaction thereof, an oligomer which is partially condensed in advance may be used.

The condensation reaction of the hydrolysate of the silicon-containing compound may be performed at the same time with the hydrolysis reaction of the silicon-containing compound, or may be performed in a separate step from the hydrolysis reaction, using a different catalyst if necessary. In that case, heating may be performed if necessary.

The hydrolysis reaction of the silicon-containing compound and/or the condensation reaction may also be performed after or before adding the silicon-containing compound to the metallic particles and the organic molybdenum compound, but is preferably performed after the addition of the molybdenum compound. The silicon-containing compound does not need to be completely hydrolyzed.

The hydrolysis reaction of the silicon-containing compound and/or the condensation reaction is preferably performed using a solvent. Examples of the solvent for use in dilution include water; alcohols such as methanol, ethanol, propanol, butanol, isopropanol and octanol; ether alcohols and esters thereof, such as ethylene glycol monoethyl ether, ethylene glycol monobutyl ether, diethylene glycol monoethyl ether, diethylene glycol monobutyl ether, propylene glycol monoethyl ether, propylene glycol monomethyl ether and dipropylene glycol monomethyl ether; and glycols such as ethylene glycol, propylene glycol, 1,3-butanediol, 1,4-butanediol, polyoxyethylene glycol, polyoxypropylene glycol and ethylenepropylene glycol. When alcohols or ether alcohols are used for the solvent, an exchange reaction of an alkoxy group in the silicon-containing compound with the solvent may occur, but such alcohols may be used for the hydrolysis reaction as they are.

The hydrolysate of the silicon-containing compound and/or the condensate thereof is preferably added in an amount of 0.01 to 50 parts by weight, and more preferably 1 to 30 parts by weight, based on 100 parts by weight of the metallic particles.

The hydrolysate of the silicon-containing compound and/or the condensate thereof, used in the present invention, may be added at the time of pulverizing or extending a raw material metal powder by a ball mill, may be mixed in a slurry in which the solvent is added to the metallic particles, or may be kneaded in a paste having a reduced amount of the solvent.

A predetermined amount to be added may be initially added at once, or may be continuously added over a predetermined time.

The metallic pigment composition of the present invention contains at least one selected from the group consisting of (i) an organic oligomer or polymer, and ii) inorganic phosphoric acids or salts thereof; in order to have excellent adhesion and chemical resistance when forming a coating film.

As the organic oligomer or polymer, an acrylic resin and/or a polyester resin is preferably used. The organic oligomer or polymer contained in the present invention preferably has interaction with at least one of the metallic particles, the organic molybdenum compound, and the hydrolysate of the silicon-containing compound and/or the condensate thereof, which coexist. Therefore, the acrylic resin is preferably a polymer made of monomers which can interact with at least one of the metallic particles, the organic molybdenum compound, and the hydrolysate of the silicon-containing compound and/or the condensate thereof, which coexist, and at least one of monomers which can have a crosslinked structure, and in that case, other monomers may be used in combination.

The monomers which can interact with at least any one of the metallic particles, the organic molybdenum compound, and the hydrolysate of the silicon-containing compound and/or the condensate thereof, which coexist, are preferably at least one selected from the group consisting of, for example, radical and/or ionic polymerizable unsaturated carboxylic acid; phosphoric acid or phosphonic acid ester having a radical and/or ionic polymerizable double bond; a compound having a radical and/or ionic polymerizable double bond and an isocyanate group; a compound having a radical and/or ionic polymerizable double bond and an epoxy group; a compound having a radical and/or ionic polymerizable double bond and an amino group; a compound having a radical and/or ionic polymerizable double bond and a hydrolyzable silyl group; a compound having a radical and/or ionic polymerizable double bond and a sulfone group; a compound having a radical and/or ionic polymerizable double bond and a hydroxyl group; and the like.

Examples of the radical and/or ionic polymerizable unsaturated carboxylic acid include acrylic acid, methacrylic acid, itaconic acid, crotonic acid, citraconic acid, fumaric acid, maleic acid, maleic anhydride, monomethyl maleate, monoethyl maleate, monooctyl maleate, monomethyl fumarate, monoethyl fumarate, monooctyl fumarate, β-carboxyethyl (meth)acrylate, 2-(meth)acryloyloxyethylhexahydrophthalic acid, 2-(meth)acryloyloxypropylhexahydrophthalic acid, 2-methacroyloxyethylsuccinic acid, 2-methacroyloxyethylmaleic acid, 2-(meth)acryloyloxyethylphthalic acid, 2-(meth)acryloyloxypropylphthalic acid, myristoleic acid, oleic acid, eicosadienoic acid, docosadienoic acid, and the like.

Among them, acrylic acid, methacrylic acid, itaconic acid, fumaric acid, maleic acid, maleic anhydride, and the like are preferably used.

As the phosphoric acid or phosphonic acid ester having a radical and/or ionic polymerizable double bond, a mono or diester of phosphoric acid or phosphonic acid is used. Among them, a mono or diester of phosphoric acid is preferably used, and such a compound is represented by the following general formula (10): 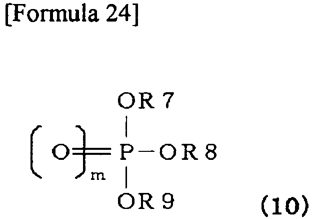 (wherein R7, R8 and R9 may be the same or different, and are each a hydrogen atom, a hydrocarbon group having 1 to 30 carbon atoms that may optionally contain an ether group, an ester group, a hydroxyl group, a carbonyl group, and a halogen group, a hydrocarbon group that may optionally contain a ring structure or an unsaturated bond, or a group represented by the following general formula (11), wherein one or two of R7, R8 and R9 are a hydrogen atom, one or two thereof are the following general formula (11), and the total number of carbon atoms of R7, R8 and R9 is 4 or more. m represents a numerical value of 0 or 1.) 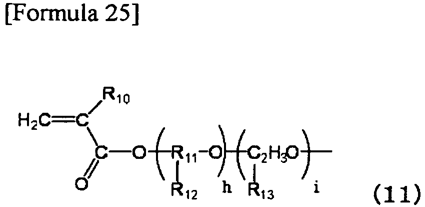 (wherein RIO and R13 represent a hydrogen atom or a methyl group, R11 is a divalent organic group having 2 to 8 carbon atoms that may optionally contain an oxygen atom, R12 represents a hydrogen atom or the following general formula (12). h represents a numerical value of 0 or 1 and i represents a numerical value of 0 to 10.)

### [Formula 26]

-CH₂X (12)

(wherein X represents a hydrogen atom or a chlorine atom.).

Specific examples thereof include 2-(meth)acryloyloxyethyl acid phosphate, di-2-(meth)acryloyloxyethyl acid phosphate, tri-2-(meth)acryloyloxyethyl phosphate and any mixtures thereof; 2-(meth)acryloyloxypropyl acid phosphate, di-2-(meth)acryloyloxypropyl acid phosphate, tri-2-(meth)acryloyloxypropyl phosphate and any mixtures thereof; phenyl-2-(meth)acryloyloxyethyl acid phosphate, butyl-2-(meth)acryloyloxyethyl acid phosphate, octyl-2-(meth)acryloyloxyethyl acid phosphate, bis(2-chloroethyl)vinyl phosphonate, 3-chloro-2-acid phosphoxypropyl (meth)acrylate, acid phosphoxy-polyoxyethylene glycol mono(meth)acrylate and acid phosphoxy-polyoxypropylene glycol mono(meth)acrylate. These can also be optionally used in the form of a salt with an inorganic base or an organic amine. The organic amine used herein is represented by the following general formula (8): 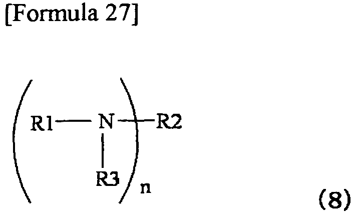 (wherein R1, R2 and R3 may be the same or different, are each a hydrogen atom, or a mono or divalent hydrocarbon group having 1 to 30 carbon atoms that may optionally contain an ether bond, an ester bond, a hydroxyl group, a carbonyl group, and a thiol group, R1 and R2 are optionally taken together to form a 5-membered or 6-membered cycloalkyl group, R1 and R2 are optionally taken together with a nitrogen atom to form a 5-membered or 6-membered ring that is capable of additionally containing a nitrogen or oxygen atom as a crosslinking member, or R1, R2 and R3 are optionally taken together to form a multi-membered multiring composition that is capable of containing one or more additional nitrogen atoms and/or oxygen atoms as a crosslinking members. R1, R2 and R3 are not a hydrogen atom at the same time. n represents a numerical value of 1 to 2.).

Among them, 2-(meth)acryloyloxyethyl acid phosphate, di-2-(meth)acryloyloxyethyl acid phosphate, tri-2-(meth)acryloyloxyethyl phosphate and any mixtures thereof; 2-(meth)acryloyloxypropyl acid phosphate, di-2-(meth)acryloyloxypropyl acid phosphate, tri-2-(meth)acryloyloxypropyl phosphate and any mixtures thereof; and organic amine salts thereof, and the like, in particular, salts such as ethanolamine salts and morpholine salts are preferably used.

Examples of the compound having a radical and/or ionic polymerizable double bond and an isocyanate group include 2-isocyanatoethyl (meth)acrylate, 2-isocyanatoethoxyethyl (meth)acrylate, 1,1-bis(acryloyloxymethyl)ethyl isocyanate, methacryloyloxyphenyl isocyanate, and the like, and these are preferably used.

Examples of the compound having a radical and/or ionic polymerizable double bond and an epoxy group include glycidyl (meth)acrylate, methylglycidyl (meth)acrylate, 3,4-epoxycyclohexylmethyl (meth)acrylate, epoxylated polybutadiene, and the like, and these are preferably used.

Examples of the compound having a radical and/or ionic polymerizable double bond and an amino group include aminoethyl (meth)acrylate, dimethylaminoethyl (meth)acrylate, diethylaminoethyl (meth)acrylate, morpholinoethyl (meth)acrylate, N,N-dimethylaminoethyl (meth)acrylamide, 2-aminoethyl vinyl ether, 2-dimethylaminoethyl vinyl ether, N,N-dimethylaminopropyl (meth)acrylamide, aminostyrene, N,N-dimethylaminostyrene, vinylbenzylamine, allylamine, and the like.

Among them, aminoethyl (meth)acrylate, dimethylaminoethyl (meth)acrylate, diethylaminoethyl (meth)acrylate, allylamine, and the like are preferably used.

Examples of the compound having a radical and/or ionic polymerizable double bond and a hydrolyzable silyl group include (meth)acryloyloxypropyltrimethoxysilane, (meth)acryloyloxypropyltriethoxysilane, (meth)acryloyloxypropylmethyldimethoxysilane, (meth)acryloyloxypropylmethyldiethoxysilane, (meth)acryloyloxyethoxypropyltrimethoxysilane, (meth)acryloyloxymethyldimethylsilanol, vinyltrimethoxysilane, vinyltriethoxysilane, and the like.

Among them, (meth)acryloyloxypropyltrimethoxysilane, (meth)acryloyloxypropyltriethoxysilane, and the like are preferably used.

Examples of the compound having a radical and/or ionic polymerizable double bond and a sulfone group include p-styrenesulfonic acid, allylsulfosuccinic acid, 3-sulfopropyl(meth)acrylate, and the like, and these are preferably used.

Examples of the compound having a radical and/or ionic polymerizable double bond and a hydroxyl group include (meth)acrylic acid esters having activated hydrogen, such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 2-hydroxy-3-chloropropyl (meth)acrylate, 2-hydroxy-3-phenoxypropyl (meth)acrylate, (4-hydroxymethylcyclohexyl) (meth)acrylate, 2-(meth)acryloyloxyethyl-2-hydroxyethylphthalate, polyethylene glycol mono(meth)acrylate, polypropylene glycol mono(meth)acrylate, caprolactone modified hydroxyethyl (meth)acrylate, glycerol mono(meth)acrylate and trimethylolpropane mono(meth)acrylate; hydroxyalkyl vinyl ethers such as 2-hydroxyethyl vinyl ether, 4-hydroxybutyl vinyl ether and hydroxycyclohexyl vinyl ether; unsaturated alcohols such as butene-1-ol-3, 2-methylbutene-3-ol-2, 3-methylbutene-3-ol-1 and 3-methylbutene-2-ol-1; N-methylol (meth)acrylamide; and the like.

Among them, 2-hydroxyethyl (meth)acrylate, 2-hydroxypropyl (meth)acrylate, and the like are preferably used.

These monomers which can interact with at least one of the metallic particles, the organic molybdenum compound, the hydrolysate of the silicon-containing compound and/or the condensate thereof, which co-exist, may be used solely, or two or more thereof may be mixed for use.

With respect to the amount used, the monomers are generally preferably added in an amount of 0.01 to 30 parts by weight, and further preferably 0.1 to 20 parts by weight, based on 100 parts by weight of the metallic particles.

As the monomers which can have a crosslinked structure, a monomer having at least two radical and/or ionic polymerizable double bonds in one molecule is preferable.

Examples of a monomer having two radical and/or ionic polymerizable double bonds in one molecule include ethyleneglycol di(meth)acrylate, 1,4-butanediol di(meth)acrylate, 1,6-hexanediol di(meth)acrylate, 1,9-nonanediol di(meth)acrylate, 1,6-hexanediol diglycidylether di(meth)acrylate, neopentyl glycol di(meth)acrylate, glycerin di(meth)acrylate, di(meth)acrylate of neopentyl glycol propyleneoxide adduct, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, polytetramethylene glycol di(meth)acrylate, hydroxypivalic acid neopentyl glycol ester di(meth)acrylate, di(meth)acrylate of bisphenol A ethyleneoxide adduct, di(meth)acrylate of hydrogenated bisphenol A propyleneoxide adduct, dimethylol tricyclodecane di(meth)acrylate, glycerin methacrylate acrylate, divinylbenzene, vinyl adipate, vinyl (meth)acrylate, vinyl crotonate, vinyl cinnamate, allyl vinyl ether, isopropenyl vinyl ether, and the like.

Examples of a monomer having three or more radical and/or ionic polymerizable double bonds in one molecule include trimethylolpropane tri(meth)acrylate, tri(meth)acrylate of glycerin ethylene oxide adduct, tri(meth)acrylate of trimethylolpropane propylene oxide adduct, ditrimethylolpropane tetra(meth)acrylate, pentaerythritol tetra(meth)acrylate, dipentaerythritol penta(meth)acrylate, dipentaerythritol hexa(meth)acrylate, hexa(meth)acrylate of dipentaerythritol caprolactone adduct, dipentaerythritol tri(meth)acrylate tripropionate, dipentaerythritol hexa(meth)acrylate monopropionate, and the like.

These monomers which can have a crosslinked structure may be used solely, or two ore more thereof may be mixed for use.

With respect to the amount used, the monomers are generally preferably added in an amount of 0.01 to 50 parts by weight, and further preferably 1 to 30 parts by weight, based on 100 parts by weight of the metallic particles.

In addition to the monomers which can interact with at least one of the metallic particles, the organic molybdenum compound, and the hydrolysate of the silicon-containing compound and/or the condensate thereof, which coexist, and the monomers which can have a crosslinked structure, other monomers can also be copolymerized.

Examples of other monomers which can be copolymerized include (meth)acrylic acid esters such as methyl (meth)acrylate, ethyl (meth)acrylate, isopropyl (meth)acrylate, n-butyl (meth)acrylate, hexyl (meth)acrylate, cyclohexyl (meth)acrylate, 2-ethylhexyl (meth)acrylate, lauryl (meth)acrylate, benzyl (meth)acrylate, isobornyl (meth)acrylate, dicyclopentenyl (meth)acrylate and furfuryl (meth)acrylate; (meth)acrylic acid esters having a fluorine-containing side chain, such as trifluoroethyl (meth)acrylate, 2,2,3,3-tetrafluoropropyl (meth)acrylate and perfluorooctylethyl (meth)acrylate; unsaturated amides such as (meth)acrylamide, N,N-dimethyl (meth)acrylamide, N-isopropyl (meth)acrylamide, (meth)acryloyl morpholine and diacetone (meth)acrylamide; vinyl esters such as vinyl acetate, vinyl propionate, vinyl pivalate, vinyl caprate, vinyl stearate and vinyl benzoate; vinyl ethers such as methyl vinyl ether, ethyl vinyl ether, butyl vinyl ether, cyclohexyl vinyl ether, 2-ethylhexyl vinyl ether and lauryl vinyl ether; fluorinated olefins such as tetrafluoroethylene, chlorotrifluoroethylene, hexafluoropropylene and perfluoropentene-1; styrene, α-methylstyrene, vinyltoluene, (meth)acrylonitrile, dibutyl fumarate, and the like.

Furthermore, monomers having a condensed polycyclic hydrocarbon skeleton, such as pentalene, indene, naphthalene, azulene, heptalene, biphenylene, indacene, fluorene, 9,9-bisphenylfluorene, phenanthrene, anthracene, triphenylene, pyrene and perylene, and monomers having a condensed heterocyclic skeleton, such as indole, quinoline, indolizine, carbazole, acridine and phenoxazine can also be used. Specific examples thereof include vinylnaphthalene, divinylnaphthalene, vinylanthracene, divinylanthracene, N-vinylcarbazole, N-acryloylcarbazole, divinylfluorene, 9,9-bis[4-((meth)acryloyloxyethoxy)phenyl]fluorene and 9,9-bis[4-((meth)acryloyloxy-2(or 1)methylethoxy)phenyl]fluorene.

All the above monomers may be used solely, or two or more thereof may be mixed for use.

The amount used is, for example, generally in the order of 0 to 30 parts by weight based on 100 parts by weight of the metallic particles.

These (meth)acrylic monomers are polymerized by any known method such as radical polymerization and ionic polymerization, and usually simply polymerized by a radical polymerization method using a polymerization initiator.

Examples of the radical polymerization initiator include peroxides such as benzoyl peroxide, lauroyl peroxide and bis-(4-t-butylcyclohexyl)peroxydicarbonate; azo compounds such as 2,2'-azobis-isobutyronitrile and 2,2'-azobis-2,4-dimethylvaleronitrile; and the like.

The amount used is not particularly limited, and usually in the order of 0.1 to 20 parts by weight based on 100 parts by weight of a monomer having a radical polymerizable double bond.

Polymerization is performed in a slurry, in which the solvent is added to the metallic particles, by adding the monomer and the polymerization initiator simultaneously or separately at once, simultaneously or separately in portions, or simultaneously or separately in series.

In particular, a method of adding the monomer and the polymerization initiator separately in portions or in series is preferably used.

The monomer and the polymerization initiator may be added at the same time as adding the organic molybdenum compound and the hydrolysate of the silicon-containing compound and/or the condensate thereof to the metallic particles, but may be preferably added in a different kind of solvent if necessary, after adding the organic molybdenum compound and the hydrolysate of the silicon-containing compound and/or the condensate thereof, thereby performing polymerization.

The solvent at the time of adding and polymerization reaction may be a hydrophobic solvent or a hydrophilic solvent. Examples of the hydrophobic solvent include mineral spirit, solvent naphtha, LAWS (Low Aromatic White Spirit), HAWS (High Aromatic White Spirit), toluene, xylene, esters such as ethyl acetate and butyl acetate, and ketones such as methyl ethyl ketone, methyl isobutyl ketone and cyclohexanone. Examples of the hydrophilic solvent that can be used include alcohols such as methanol, ethanol, propanol, butanol, isopropanol and octanol, ether alcohols and esters thereof, such as ethylene glycol monoethyl ether, ethylene glycol monobutyl ether, diethylene glycol monoethyl ether, diethylene glycol monobutyl ether, propylene glycol monoethyl ether, propylene glycol monomethyl ether and dipropylene glycol monomethyl ether, glycols such as propylene glycol, polyoxyethylene glycol, polyoxypropylene glycol and ethylene propylene glycol, and the like. These can be used solely or used as a mixture thereof.

Solvents having a relatively low polarity, for example, mineral spirit, solvent naphtha, LAWS, HAWS, toluene, xylene, butyl acetate, methyl isobutyl ketone, cyclohexanone, octanol, ether alcohols and esters thereof, such as ethylene glycol monoethyl ether, ethylene glycol monobutyl ether, diethylene glycol monoethyl ether, diethylene glycol monobutyl ether, propylene glycol monoethyl ether, propylene glycol monomethyl ether and dipropylene glycol monomethyl ether, and the like are more preferably exemplified.

The polymerization reaction in the slurry is performed with the concentration of the metallic particles in the slurry being preferably 5 to 20% by weight. The polymerization temperature and time are appropriately determined depending on the progression of the reaction, and usually the temperature is about 0°C to 150°C and the time is about 0.5 to 48 hours.

Examples of the polyester resins include polyester resins obtained by a condensation reaction of one or a mixture selected from the group of carboxylic acids such as succinic acid, adipic acid, sebacic acid, dimer acid, maleic anhydride, phthalic anhydride, isophthalic acid, terephthalic acid, trimellitic acid and pyromellitic acid, with one or a mixture of polyhydric alcohols selected from the group of diols such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 2,5-hexanediol, 2-methyl-2,4-pentanediol, 2-ethyl-hexanediol, 1,2-octanediol, 1,2-decanediol, 2,2,4-trimethylpentanediol, 2-butyl-2-ethyl-1,3-propanediol and 2,2-diethyl-1,3-propanediol; triols such as glycerin and trimethylolpropane; and tetraols such as diglycerin, dimethylolpropane and pentaerythritol.

With respect to the amount used, the polyester resin is generally added in an amount of 0.01 to 50 parts by weight, and preferably 1 to 30 parts by weight based on 100 parts by weight of the metallic particles.

The organic oligomer or polymer for use in the present invention may be obtained by starting polycondensation at the same time as or after adding the organic molybdenum compound and the hydrolysate of the silicon-containing compound and/or the condensate thereof to the metallic particles, or may be added in advance in the state of oligomer or polymer, but is preferably obtained by performing polycondensation.

Examples of the inorganic phosphoric acids for use in the present invention include orthophosphoric acid, pyrophosphoric acid, metaphosphoric acid, triphosphoric acid, tetraphosphoric acid, phosphorous acid, polyphosphoric acid, laurylphosphoric acid, polyoxypropylene oleylether phosphoric acid and dipolyoxyethylene nonylphenylether phosphoric acid. Among them, orthophosphoric acid, pyrophosphoric acid, metaphosphoric acid, triphosphoric acid, tetraphosphoric acid and phosphorous acid are particularly preferable.

Substances constituting the inorganic phosphoric acid salts or for use in the present invention include alkali metals such as potassium and sodium, alkaline earth metals such as calcium and magnesium, metals such as aluminum, zinc and manganese, ammonium, and amines represented by the following general formula (8): 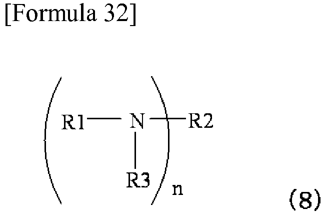 (wherein R1, R2 and R3 may be the same or different, are each a hydrogen atom, or a mono or divalent hydrocarbon group having 1 to 30 carbon atoms that may optionally contain an ether bond, an ester bond, a hydroxyl group, a carbonyl group, and a thiol group, wherein R1 and R2 are optionally taken together to form a 5-membered or 6-membered cycloalkyl group, R1 and R2 are optionally taken together with a nitrogen atom to form a 5-membered or 6-membered ring that is capable of additionally containing a nitrogen or oxygen atom as a crosslinking member, or R1, R2 and R3 are optionally taken together to form a multi-membered multiring composition that is capable of containing one or more additional nitrogen atoms and/or oxygen atoms as a crosslinking member. R1, R2 and R3 are not a hydrogen atom at the same time. n represents a numerical value of 1 to 2.).

Particularly preferable examples among these amines include diethylamine, triethylamine, propylamine, dipropylamine, tripropylamine, octylamine, dioctylamine and trioctylamine, and additionally primary, secondary and tertiary amines having a straight or branched alkyl group having in the order of 10 to 20 carbon atoms, morpholine, N-methylmorpholine, ethanolamine, diethanolamine, N-methylethanolamine, N-methyldiethanolamine, N,N-dimethylethanolamine and triethanolamine.

The inorganic phosphoric acids or salts thereof for use in the present invention may be added when the raw material metal powder is pulverized by a ball mill, may be mixed in a slurry in which the solvent is added to the metallic pigment, or may be kneaded in a paste having a reduced amount of the solvent. In order to achieve a uniformly mixed state, they are preferably diluted with a solvent, mineral oil or the like in advance and added. Examples of the solvent for use in dilution include alcohols such as methanol and isopropanol, cellosolves such as propylene glycol monomethyl ether, hydrocarbon solvents such as hexane, octane, isooctane, benzene, toluene, xylene, tetralin and decalin, industrial gasolines such as mineral spirit and solvent naphtha, esters such as ethyl acetate and butyl acetate, ketones such as methyl ethyl ketone, methyl isobutyl ketone and cyclohexane, mineral oils, and the like.

In the production of the metallic pigment composition of the present invention, the order of the mixing of the organic molybdenum compound, the hydrolysate of the silicon-containing compound and/or the condensate thereof, and at least one selected from the group consisting of the organic oligomer or polymer, and the inorganic phosphoric acids or salts thereof, with the metallic particles; the polymerization of the organic oligomer or polymer; or the hydrolysis and condensation reaction treatment of the silicon-containing compound may be freely determined. However, it is preferable to perform these operations in the presence of the solvent selected from the examples described in items each describing each compound, and further, it is preferable to first perform the mixing treatment or the hydrolysis and condensation reaction treatment of the organic molybdenum compound and the hydrolysate of the silicon-containing compound and/or the condensate thereof in separate steps or in a single step. In that case, it is more preferable to perform, after the mixing treatment with the organic molybdenum compound, the mixing treatment or the hydrolysis and condensation reaction treatment with the hydrolysate of the silicon-containing compound and/or the condensate thereof.

Furthermore, it is preferable to perform, after treating the organic molybdenum compound and the hydrolysate of the silicon-containing compound and/or the condensate thereof in separate steps or in a single step, the mixing or polymerization treatment of at least one selected from the organic oligomer or polymer; and the inorganic phosphoric acids or salts thereof. When the organic oligomer or polymer and the inorganic phosphoric acids or salts thereof are used together, they may be subjected to the mixing (polymerization) treatment in separate steps or in a single step, but, more preferably, the organic oligomer or polymer are subjected to the mixing or polymerization treatment and thereafter the inorganic phosphoric acids or salts thereof are subjected to the mixing treatment.

To the metallic pigment composition of the invention of the present application may be further added at least one selected from an antioxidant, a light stabilizer, a polymerization inhibitor and a surfactant, in addition to the organic molybdenum compound, the hydrolysate of the silicon-containing compound and/or the condensate thereof, the organic oligomer or polymer, and/or the inorganic or organic phosphoric acid compound.

The antioxidant is typified by a phenol compound, a phosphorus compound and a sulfur compound. As a suitable compound, exemplified are phenol compounds such as 2,6-di-t-butylphenol, 2,4-dimethyl-6-t-butylphenol, 2,6-di-t-butyl-p-cresol (BHT), 2,6-di-t-butyl-4-ethylphenol, 2,4,6-tri-t-butylphenol, butylhydroxyanisole (BHA), 2,2'-methylene bis(4-methyl-6-t-butylphenol), 4,4'-thiobis(3-methyl-6-t-butylphenol), octadecyl-3-(3,5-di-t-butylphenyl)propionate (IRGANOX 1076), hexamethylene bis[3-(3,5-di-t-butyl-4-hydroxyphenyl)propionate] (IRGANOX 259), thiodiethylene bis[3-(3,5-di-t-butyl-4-hydroxyphenyl)propionate] (IRGANOX 1035), tris(3,5-di-t-butyl-4-hydroxybenzyl)isocyanurate (IRGANOX 3114), tetrakis[methylene-3-(3',5'-di-t-butyl-4-hydroxyphenyl)propionate]methane (IRGANOX 1010), calcium diethylbis[[[3,5-bis(1,1-dimethylethyl)-4-hydroxyphenyl]methyl]phosphonate] (IRGANOX 1425 WL), ethylenebis(oxyethylene) bis[3-(5-t-butyl-4-hydroxy-m-tolyl)propionate] (IRGANOX 245), benzene propanoic acid, 3,5-bis(1,1-dimethylethyl)-4-hydroxyalkylester (IRGANOX 1135), N,N'-hexane-1,6-diyl bis[3-(3,5-di-t-butyl-4-hydroxyphenyl)propionamide] (IRGANOX 1098) and tocopherol; phosphorus compounds such as triphenylphosphite, diphenylnonylphenylphosphite, tris-(2,4-di-t-butylphenyl)phosphite, trisnonylphenylphosphite, tris-(mono- and di-mixed nonylphenyl)phosphite, diphenylisooctylphosphite, 2,2'-methylenebis(4,6-di-t-butylphenyl)octylphosphite, diphenylisodecylphosphite, phenyldiisodecylphosphite, diphenylmono(tridecyl)phosphite, 2,2'-ethylidenebis(4,6-di-t-butylphenol)fluorophosphite, phenyldiisodecylphosphite, phenyldi(tridecyl)phosphite, tris(2-ethylhexyl)phosphite, tris(isodecyl)phosphite, tris(tridecyl)phosphite, dibutyl hydrogen phosphite, trilauryltrithiophosphite, tetrakis(2,4-di-t-butylphenyl)4,4'-biphenylenediphosphonite, 4,4'-isopropylidenediphenolalkyl(C12 to C15)phosphite, 4,4'-butylidenebis(3-methyl-6-t-butylphenyl)di-tridecylphosphite, distearyl-pentaerythritoldiphosphite, bis(nonylphenyl)pentaerythritoldiphosphite, bis(2,4-di-t-butylphenyl)pentaerythritoldiphosphite, cyclic neopentane tetrayl bis(2,4-di-t-butylphenylphosphite), phenyl-bisphenol A pentaerythritoldiphosphite, tetraphenyl dipropylene glycol diphosphite, 1,1,3-tris(2-methyl-4-di-tridecylphosphite-5-t-butylphenyl)butane, tetraphenyl tetra(tridecyl)pentaerythritol tetraphosphite, zinc dialkyldithiophosphate (ZnDTP), 3,4,5,6-dibenzo-1,2-oxaphosphane-2-oxide, 3,5-di-t-butyl-4-hydroxybenzylphosphite-diethylester and a hydrogenated bisphenol A phosphite polymer; sulfur compounds such as dilauryl-3,3'-thiodipropionic acid ester (DLTTDP), ditridecyl-3,3'-thiodipropionic acid ester, dimyristyl-3,3'-thiodipropionic acid ester (DMTDP), distearyl-3,3'-thiodipropionic acid ester (DSTDP), laurylstearyl-3,3'-thiodipropionic acid ester, pentaerythritol tetra(β-lauryl-thiopropionate)ester, stearylthiopropionamide, bis[2-methyl-4-(3-n-alkyl(C12 to C14)thiopropionyloxy)-5-t-butylphenyl]sulfide, dioctadecyldisulfide, 2-mercaptonbenzimidazole, 2-mercapto-6-methylbenzimidazole and 1,1'-thiobis(2-naphthol); ascorbic acid; and the like.

The light stabilizer is typified by a benzotriazole compound, a benzophenone compound, a salicylate compound, cyanoacrylate, an oxalic acid derivative, a hindered amine compound (HALS) and a hindered phenol compound, some of which is used as the above-described antioxidant.

Examples of a suitable compound include benzotriazole compounds such as 2-(2'-hydroxy-5'-methylphenyl)benzotriazole, 3",4",2-(2'-hydroxy-5'-t-octylphenyl)benzotriazole, 2-(2'-hydroxy-4'-t-octoxyphenyl)benzotriazole, 2-(2'-hydroxy-3',5'-di-t-butylphenyl)benzotriazole, 2-(2'-hydroxy-3',5'-di-t-amylphenyl)benzotriazole, 2-(2'-hydroxy-3'-dodecyl-5'-methylphenyl)benzotriazole, 2-(2'-hydroxy-3',5'-bis(α,α-dimethylbenzyl)phenylbenzotriazole, 2-[2'-hydroxy-3'-(3",4",5",6"-tetraphthalimidemethyl)-5'-methylphenyl]benzotriazole, 2-(2'-hydroxy-3 '-t-butyl-5 '-methylphenyl)-5-chlorobenzotriazole, 2-(2'-hydroxy-3', 5 '-di-t-butylphenyl)-5-chlorobenzotriazole, 2,2'-methylenebis[4-(1,1,3,3-tetramethylbutyl)-6-(2H-benzotriazole-2-yl)phenol, and a condensate of methyl-3-[3-t-butyl-5-(2H-benzotriazole-2-yl)-4-hydroxyphenylpropionate and polyethylene glycol (molecular weight: about 300); benzophenone compounds such as 2,4-dihydroxybenzophenone, 2-hydroxy-4-methoxybenzophenone, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, 2-hydroxy-4-methoxy-2'-carboxybenzophenone, 2-hydroxy-4-methoxy-5-sulfoxybenzophenone, 2,2'-dihydroxy-4,4'-dimethoxybenzophenone, 2,2',4,4'-tetrahydroxybenzophenone, 2,2'-dihydroxy-4,4'-dimethoxy-5-sodiumsulfoxybenzophenone, bis(5-benzoyl-4-hydroxy-2-methoxyphenyl)methane, a polymer of 4-(2-acryloyloxyethoxy)-2-hydroxybenzophenone, and a mixture of 2,2'-dihydroxy-4,4'-dimethoxybenzophenone and other tetrasubstituted benzophenone; salicylate compounds such as phenylsalicylate, 2,5-di-t-butyl-4-hydroxybenzoic acid-n-hexadecylester, 4-t-butylphenylsalicylate, 4-t-octylphenylsalicylate and 2,4-di-t-butylphenyl-3',5'-di-t-butyl-4'-hydroxybenzoate; cyanoacrylate compounds such as ethyl((β,β-diphenyl)cyanoacrylate and 2-ethylhexyl((β,β-diphenyl)cyanoacrylate; oxalic acid derivatives such as 2-ethoxy-2'-ethyloxalic acid bisanilide, 2-ethoxy-5-t-butyl-2'-ethyloxalic acid bisanilide and an oxalic acid anilide derivative; hindered amine (HALS) compounds such as [4-(4-hydroxy-3,5-di-t-butylphenyl)propionyl]-N-(4-hydroxy-3,5-di-t-butylphenyl)methyl-2,2,6,6-tetramethylpiperidine, 1,1'-(1,2-ethanediyl)bis(3,3,5,5-tetramethylpiperazineone), bis(2,2,6,6-tetramethyl-4-piperidinyl)sebacate, methyl-(N-methyl-2,2,6,6-tetramethyl-piperidinyl)sebacate, bis-(N-methyl-2,2,6,6-tetramethyl-piperidinyl)sebacate, decane diacid bis(2,2,6,6-tetramethyl-1-(octyloxy)-4-piperidinyl)ester, bis(1,2,2,6,6-pentamethyl-4-piperidyl)[[3,5-bis(1,1-dimethylethyl)-4-hydroxyphenyl]methyl]butylmalonate, a condensate of 1,2,3,4-butanecarboxylic acid, 2,2,6,6-tetramethyl-4-piperidinol and tridecyl alcohol, a condensate of 1,2,3,4-butanecarboxylic acid, 1,2,2,6,6-pentamethyl-4-piperidinol and tridecyl alcohol, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly[[6-(1,1,3,3-tetramethylbutylamino)-1,3,5-triazine-2,4-diyl], [(2,2,6,6-tetramethylpiperidine)imino]hexamethylene[(2,2,6,6-tetramethylpiperidyl)imino]], poly[6-morpholino-s-triazine-2,4-diyl-2,2,6,6-tetramethylpiperidylimino-hexamethylene][2,2,6,6-tetramethylpiperidylimino]], a condensate of 1,2,3,4-butanetetracarboxylic acid, 2,2,6,6-tetramethyl-4-piperidinol and β,β,β',β'-tetramethyl-3,9-(2,4,8,10-tetraoxaspiro[5,5]undecane)diethanol; and semicarbazide compounds such as 1,6-hexamethylene bis(N,N-dimethylsemicarbazide) and 1,1,1',1'-tetramethyl-4,4'-(methylene-di-p-phenylene)disemicarbazide.

The polymerization inhibitor is typified by phenols, quinones, a nitro compound, a nitroso compound, amines and sulfides. Examples of a suitable compound include phenols such as hydroquinone, hydroquinonemonomethylether, mono-tert-butylhydroquinone, catechol, p-tert-butylcatechol, p-methoxyphenol, p-tert-butylcatechol, 2,6-di-tert-butyl-m-cresol, pyrogallol, β-naphthol and 4-methoxy-1-naphthol; quinones such as benzoquinone, 2,5-diphenyl-p-benzoquinone, p-toluquinone and p-xyloquinone; nitro compounds or nitroso compounds such as nitromethane, nitroethane, nitrobutane, nitrobenzene, a nitrobenzenesulfonic acid compound, m-dinitrobenzene, 2-methyl-2-nitrosopropane, α-phenyl-tert-butylnitrone and 5,5-dimethyl-1-pyrroline-1-oxide; amines such as chloranil-amine, diphenylamine, diphenylpicrylhydrazine, phenol-α-naphthylamine, pyridine and phenothiazine; and sulfides such as dithiobenzoylsulfide and dibenzyltetrasulfide.

Examples of the surfactant include non-ionic surfactants typified by: polyoxyalkylene alkyl ethers such as polyoxyethylene lauryl ether, polyoxyethylene cetyl ether, polyoxyethylene stearyl ether and polyoxyethylene oleyl ether; polyoxyalkylene alkylphenyl ethers such as polyoxyethylene octylphenyl ether and polyoxyethylene nonylphenyl ether; polyoxyalkylene alkylaminoethers such as polyoxyethylene laurylaminoether and polyoxyethylene stearylaminoether; sorbitan fatty acid esters such as sorbitan monolaurate, sorbitan monopalmitate, sorbitan monostearate and sorbitan monooleate; polyoxyalkylene sorbitan fatty acid esters such as polyoxyethylene sorbitan monolaurate, polyoxyethylene sorbitan monopalmitate, polyoxyethylene sorbitan monostearate and polyoxyethylene sorbitan monooleate; polyalkylene glycol fatty acid esters such as polyethylene glycol monolaurate, polyethylene glycol monooleate, polyethylene glycol monostearate, polyethylene glycol dilaurate and polyethylene glycol distearate; and glycerin fatty acid esters such as lauric acid monoglyceride, stearic acid monoglyceride and oleic acid monoglyceride. Also, examples of the surfactant include anionic surfactants typified by: sulfuric acid ester salts such as polyoxyethylene lauryl ether sulfate sodium, polyoxyethylene octyl phenyl ether sulfate sodium, polyoxyethylene nonyl phenyl ether sulfate sodium, laurylsulfuric acid triethanolamine, sodium lauryl sulfate, potassium lauryl sulfate and ammonium lauryl sulfate; sulfonic acid salts such as sodium dodecylbenzenesulfonate, sodium alkylnaphthalenesulfonate and sodium dialkylsulfosuccinate; and phosphoric acid ester salts such as potassium alkylphosphate. Also, examples of the surfactant include cationic surfactants typified by: quaternary ammonium salts such as lauryl trimethyl ammonium chloride, cetyl trimethyl ammonium chloride and stearyl trimethyl ammonium chloride. And, one, or two or more selected from the above examples can be used as the surfactant. Among them, polyoxyethylene lauryl ether, polyoxyethylene cetyl ether, polyoxyethylene stearyl ether, polyoxyethylene oleyl ether or a mixture thereof is particularly preferably exemplified.

The metallic pigment composition obtained by the present invention can also be used for organic solvent coatings, inks and the like. Additionally, the metallic pigment composition obtained by the present invention can be added to water-based coatings or water-based inks, in which resins as a coating film-forming component are dissolved or dispersed in a medium mainly containing water, thereby forming metallic water-based coatings or metallic water-based inks. The metallic pigment composition can also be kneaded with resins or the like and thus used as a waterproof binder or filler. The antioxidant, light stabilizer, polymerization inhibitor and surfactant may be added when the metallic pigment composition is blended in, for example, water-based coatings or water-based inks, or resins.

When the metallic pigment composition obtained by the present invention is used for coatings or inks, it may be added to (water-based) coatings or (water-based) inks as it is, but is preferably added thereto after being dispersed in a solvent in advance. The solvent here used includes water, texanol, diethylene glycol monobutyl ether, propylene glycol monomethyl ether and the like. Examples of the resins include acrylic resins, polyester resins, polyether resins, epoxy resins, fluorine resins and rosin resins.

Examples of the acrylic resins include (meth)acrylates such as methyl (meth)acrylate, ethyl (meth)acrylate, isopropyl (meth)acrylate, n-butyl (meth)acrylate, 2-ethylhexyl (meth)acrylate and lauryl (meth)acrylate; (meth)acrylates having active hydrogen, such as 2-hydroxyethyl (meth)acrylate, 2-hydroxypropyl (meth)acrylate, 2-hydroxybutyl (meth)acrylate, 3-hydroxypropyl (meth)acrylate and 4-hydroxybutyl (meth)acrylate; unsaturated carboxylic acids such as acrylic acid, methacrylic acid, maleic acid and itaconic acid; unsaturated amides such as acrylamide, N-methylolacrylamide and diacetoneacrylamide; and acrylic resins obtained by polymerizing one or a mixture selected from other polymerizable monomers such as glycidyl methacrylate, styrene, vinyltoluene, vinyl acetate, acrylonitrile, dibutyl fumarate, p-styrenesulfonic acid and allylsulfosuccinic acid.

A polymerization method is generally emulsion polymerization, but the acrylic resins can also be produced by suspension polymerization, dispersion polymerization or solution polymerization. The emulsion polymerization can also be stepwise polymerization.

Examples of the polyester resins include polyester resins obtained by condensation reaction of one or a mixture selected from the group of carboxylic acids such as succinic acid, adipic acid, sebacic acid, dimer acid, maleic anhydride, phthalic anhydride, isophthalic acid, terephthalic acid, trimellitic acid and pyromellitic acid, with one or a mixture of polyhydric alcohols selected from the group of diols such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol and 2,2-diethyl-1,3-propanediol, triols such as glycerin and trimethylolpropane, and tetraols such as diglycerin, dimethylolpropane and pentaerythritol; and polycaprolactones obtained by ring-opening polymerization of ε-caprolactone to a hydroxyl group of a low molecular weight polyol.

The polyether resins include polyether polyols obtained by adding one or a mixture of alkylene oxides such as ethylene oxide, propylene oxide, butylene oxide, cyclohexene oxide and styrene oxide to one or a mixture of polyhydric hydroxyl compounds by means of a strong basic catalyst such as hydroxide of lithium, sodium, potassium or the like, alcoholate or alkylamine; polyether polyols obtained by reacting alkylene oxide with a polyfunctional compound such as ethylenediamines; polyether polyols obtained by ring-opening polymerization of cyclic ethers such as tetrahydrofuran; so-called polymer polyols obtained by polymerizing acrylamide or the like by using these polyethers as a medium; and the like.

These resins are preferably emulsified, dispersed or dissolved in water. Thus, carboxyl groups, sulfone groups and the like contained in the resins can be neutralized.

As a neutralizer for neutralizing the carboxyl groups, the sulfone groups and the like, at least one selected from, for example, ammonia, and water-soluble amino compounds such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine and morpholine can be used. Preferably, triethylamine and dimethylethanolamine which are tertiary amines, and the like can be used.

Preferable resins are acrylic resins and polyester resins.

A melamine curing agent, an isocyanate curing agent, and a resin such as urethane dispersion can be used in combination, if necessary. Furthermore, an inorganic pigment, an organic pigment, an extender pigment, a silane coupling agent, a titanium coupling agent, a dispersant, an antisettling agent, a leveling agent, a thickening agent, and a defoamer, which are generally added to coatings, can be combined. The surfactant may be further added in order to make dispersibility in coatings better. Also, the antioxidant, the light stabilizer and the polymerization inhibitor may be further added in order to make storage stability of coatings better.

### Examples

Hereinafter, Examples of the present invention will be illustrated.

### [Production Example 1]

To 135 g of a commercially available aluminum paste (produced by Asahi Kasei Chemicals Corporation, trade name "GX-3100 (average particle diameter: 10.5 µm, nonvolatile content: 74%)") was added a monooctylamine salt of molybdic acid so that the amount of the salt was 0.3 parts by weight based on 100 parts by weight of an aluminum metal component in the aluminum paste, and kneaded at 70°C for 6 hours to obtain metallic particles A containing an organic molybdenum compound.

### [Production Example 2]

The same procedure as in Production Example 1 was performed except that the monooctylamine salt of molybdic acid was added so that the amount thereof was 1.0 part by weight based on 100 parts by weight of an aluminum metal component in the aluminum paste, thereby obtaining metallic particles B containing an organic molybdenum compound.

### [Production Example 3]

To 135 g of a commercially available aluminum paste (produced by Asahi Kasei Chemicals Corporation, trade name "GX-3100 (average particle diameter: 10.5 µm, nonvolatile content: 74%)") was added a branched ditridecylamine salt of molybdic acid so that the amount of the salt was 0.5 parts by weight based on 100 parts by weight of an aluminum metal component in the aluminum paste, and kneaded at 70°C for 6 hours to obtain metallic particles C containing an organic molybdenum compound.

### [Production Example 4]

The same procedure as in Production Example 3 was performed except that the branched ditridecylamine salt of molybdic acid was added so that the amount thereof was 2.0 parts by weight based on 100 parts by weight of an aluminum metal component in the aluminum paste, thereby obtaining metallic particles D containing an organic molybdenum compound.

### [Production Example 5]

To 135 g of a commercially available aluminum paste (produced by Asahi Kasei Chemicals Corporation, trade name "GX-3100 (average particle diameter: 10.5 µm, nonvolatile content: 74%)") was added a distearylamine salt of molybdic acid so that the amount of the salt was 0.6 parts by weight based on 100 parts by weight of an aluminum metal component in the aluminum paste, and kneaded at 70°C for 6 hours to obtain metallic particles E containing an organic molybdenum compound.

### [Production Example 6]

The same procedure as in Production Example 5 was performed except that the distearylamine salt of molybdic acid was added so that the amount thereof was 3 parts by weight based on 100 parts by weight of an aluminum metal component in the aluminum paste, thereby obtaining metallic particles F containing an organic molybdenum compound.

### [Production Example 7]

To 135 g of a commercially available aluminum paste (produced by Asahi Kasei Chemicals Corporation, trade name "GX-3100 (average particle diameter: 10.5 µm, nonvolatile content: 74%)") were added a ditridecylamine salt of molybdic acid and MoDTC (produced by Adeka Corporation, trade name "Adeka Sakura-lube 165") so that the amounts of the salt and MoDTC were 1.0 part by weight and 0.5 parts by weight, respectively, based on 100 parts by weight of an aluminum metal component in the aluminum paste, and kneaded together with a predetermined amount of solvent naphtha at 70°C for 6 hours to obtain metallic particles G containing an organic molybdenum compound.

### [Production Example 8]

The same procedure as in Production Example 7 was performed except that the amount of the ditridecylamine salt of molybdic acid was 2.0 parts by weight based on 100 parts by weight of an aluminum metal component in the aluminum paste, thereby obtaining metallic particles H containing an organic molybdenum compound.

### [Production Example 9]

To 135 g of a commercially available aluminum paste (produced by Asahi Kasei Chemicals Corporation, trade name "GX-3160 (average particle diameter: 16 µm, nonvolatile content: 74%)") was added a monooctylamine salt of molybdic acid so that the amount of the salt was 0.5 parts by weight based on 100 parts by weight of an aluminum metal component in the aluminum paste, and kneaded at 70°C for 6 hours to obtain metallic particles I containing an organic molybdenum compound.

Aluminum pigment compositions obtained in Production Examples 1 to 9 were treated as follows.

In the following, Examples 1 to 42 are for illustration.

### [Example 1]

To 135 g of the metallic particles A containing an organic molybdenum compound, obtained in Production Example 1, was added 465 g of ethylene glycol monobutyl ether to form a slurry, and 10.0 parts by weight of tetraethoxysilane was added based on 100 parts by weight of an aluminum metal component in the aluminum pigment composition. Thereafter, 3.2 parts by weight of 25% ammonia water and 5.2 parts by weight of distilled water were added thereto, and stirred at 40°C for 2 hours. Thereafter, the resultant was heated to a temperature of 140°C and stirred for 4 hours. After the completion of the reaction, the obtained slurry was filtrated after cooling, thereby obtaining an aluminum pigment composition having a nonvolatile content of 60%. The amounts of Mo and Si contained in this aluminum pigment composition were quantitatively measured by ICP emission spectroscopy, and as a result, it was found that the amount of Mo was 0.08 parts by weight and the amount of Si was 1.01 parts by weight based on 100 parts by weight of the aluminum pigment.

### [Example 2]

3.0 parts by weight of tridecyl acid phosphate was added based on 100 parts by weight of an aluminum metal component in the aluminum pigment composition obtained in Example 1, and kneaded at 40°C for 2 hours to obtain an aluminum pigment composition.

### [Example 3]

The same procedure as in Example 1 was performed except that 10.0 parts by weight of tetraethoxysilane was changed to 8.0 parts by weight of tetraethoxysilane and 2.0 parts by weight of 3-glycidoxypropyl trimethoxysilane, thereby obtaining an aluminum pigment composition having a nonvolatile content of 62%. The amounts of Mo and Si contained in this aluminum pigment composition were quantitatively measured by ICP emission spectroscopy, and as a result, it was found that the amount of Mo was 0.08 parts by weight and the amount of Si was 0.99 parts by weight based on 100 parts by weight of the aluminum pigment.

### [Example 4]

The same procedure as in Example 1 was performed except that the metallic particles A containing an organic molybdenum compound were changed to the metallic particles B obtained in Production Example 2, thereby obtaining an aluminum pigment composition having a nonvolatile content of 60%. The amounts of Mo and Si contained in this aluminum pigment composition were quantitatively measured by ICP emission spectroscopy, and as a result, it was found that the amount of Mo was 0.3 parts by weight and the amount of Si was 1.3 parts by weight based on 100 parts by weight of the aluminum pigment.

### [Example 5]

To 135 g of the metallic particles C containing an organic molybdenum compound, obtained in Production Example 3, was added 465 g of ethylene glycol monobutyl ether to form a slurry, and 5.0 parts by weight of tetraethoxysilane and 5.0 parts by weight of hexyltrimethoxysilane were added based on 100 parts by weight of an aluminum metal component in the aluminum pigment composition. Thereafter, 3.2 parts by weight of 25% ammonia water and 5.2 parts by weight of distilled water were added thereto, and stirred at 40°C for 2 hours. Thereafter, the resultant was heated to a temperature of 140°C, and stirred for 6 hours. After the completion of the reaction, the obtained slurry was filtrated after cooling, thereby obtaining an aluminum pigment composition having a nonvolatile content of 61%. Furthermore, 0.5 parts by weight of 2,6-di-t-butyl-p-cresol was added based on 100 parts by weight of an aluminum metal component in the aluminum pigment composition, and kneaded. The obtained aluminum pigment composition was subjected to aging at 50°C for 1 week. The amounts of Mo and Si contained in this aluminum pigment composition were quantitatively measured by ICP emission spectroscopy, and as a result, it was found that the amount of Mo was 0.07 parts by weight and the amount of Si was 1.01 parts by weight based on 100 parts by weight of the aluminum pigment.

### [Example 6]

To 135 g of the metallic particles C containing an organic molybdenum compound, obtained in Production Example 3, was added 465 g of propylene glycol monomethyl ether to form a slurry, and 10.0 parts by weight of tetramethoxysilane was added based on 100 parts by weight of an aluminum metal component in the aluminum pigment composition. Thereafter, 2.0 parts by weight of N,N-dimethylethanolamine and 4.0 parts by weight of distilled water were added thereto, and stirred at 40°C for 1 hour. Thereafter, the resultant was heated to a temperature of 100°C, and stirred for 12 hours. Furthermore, 5.0 parts by weight of 3-methacryloxypropyl trimethoxysilane, which had been previously hydrolyzed by an aqueous 1 mol/L acetic acid solution, was added thereto, and stirred for 8 hours. After the completion of the reaction, the obtained slurry was filtrated after cooling, thereby obtaining an aluminum pigment composition having a nonvolatile content of 55%. The amounts of Mo and Si contained in this aluminum pigment composition were quantitatively measured by ICP emission spectroscopy, and as a result, it was found that the amount of Mo was 0.07 parts by weight and the amount of Si was 1.80 parts by weight based on 100 parts by weight of the aluminum pigment.

### [Example 7]

To 162 g of the metallic particles D containing an organic molybdenum compound, obtained in Production Example 4 was added 558 g of ethylene glycol monobutyl ether and dispersed therein, and stirred for 2 hours while maintaining a temperature of a slurry at 70°C. Thereafter, 6.0 g of tetraethoxysilane and 6.0 g of trifluoropropyltrimethoxysilane, which had been previously hydrolyzed by an aqueous 1 mol/L acetic acid solution, were added thereto, heated to a temperature of 130°C, and stirred for 6 hours. After the completion of the reaction, the obtained slurry was filtrated after cooling, thereby obtaining an aluminum pigment composition having a nonvolatile content of 60%. The amount of each component in this aluminum pigment composition was measured in the same way as in Production Example 5, and it was found that the amount of Mo was 0.28 parts by weight and the amount of Si was 1.01 parts by weight based on 100 parts by weight of Al.

### [Example 8]

To 135 g of the metallic particles E containing an organic molybdenum compound, obtained in Production Example 5, was added 465 g of ethylene glycol monobutyl ether to form a slurry, and 5.0 parts by weight of tetraethoxysilane and 5.0 parts by weight of phenyltrimethoxysilane, which had been previously hydrolyzed by an aqueous 1 mol/L acetic acid solution, were added based on 100 parts by weight of an aluminum metal component in the aluminum pigment composition and stirred at 130°C for 12 hours. After the completion of the reaction, the obtained slurry was filtrated after cooling, thereby obtaining an aluminum pigment composition having a nonvolatile content of 52%. The amounts of Mo and Si contained in this aluminum pigment composition were quantitatively measured by ICP emission spectroscopy, and as a result, it was found that the amount of Mo was 0.07 parts by weight and the amount of Si was 1.04 parts by weight based on 100 parts by weight of the aluminum pigment.

### [Example 9]

To 135 g of the metallic particles E containing an organic molybdenum compound, obtained in Production Example 5, was added 465 g of ethylene glycol monobutyl ether to form a slurry, and 5.0 parts by weight of tetraethoxysilane was added based on 100 parts by weight of an aluminum metal component in the aluminum pigment composition, and thereafter stirred at 70°C for 8 hours. During the stirring, 5.0 parts by weight of an aqueous phosphoric acid solution diluted to 20% was continuously added over 2 hours. After the completion of the reaction, the obtained slurry was filtrated after cooling, thereby obtaining an aluminum pigment composition having a nonvolatile content of 60%. Furthermore, 0.5 parts by weight of oleic acid was added based on 100 parts by weight of an aluminum metal component in the aluminum pigment composition, and kneaded. The amounts of Mo and Si contained in this aluminum pigment composition were quantitatively measured by ICP emission spectroscopy, and as a result, it was found that the amount of Mo was 0.07 parts by weight and the amount of Si was 0.50 parts by weight based on 100 parts by weight of the aluminum pigment.

### [Example 10]

To 162 g of the metallic particles F containing an organic molybdenum compound, obtained in Production Example 6, was added 558 g of ethylene glycol monobutyl ether and dispersed therein, and stirred for 1 hour while maintaining a temperature of a slurry at 40°C. Thereafter, 12.0 g of tetraethoxysilane was added, and then 9.6 g of N,N-dimethylethanolamine and 7.2 g of distilled water were added thereto and stirred for 1 hour. Thereafter, the resultant was heated to a temperature of 130°C, and stirred for 6 hours. Furthermore, 6.0 g of 3-acryloxypropyl trimethoxysilane, which had been previously hydrolyzed by an aqueous 1 mol/L acetic acid solution, was added thereto, and stirred for 2 hours. After the completion of the reaction, the obtained slurry was filtrated after cooling, thereby obtaining an aluminum pigment composition having a nonvolatile content of 63%. The amount of each component in this aluminum pigment composition was measured in the same way as in Production Example 5, and it was found that the amount of Mo was 0.30 parts by weight and the amount of Si was 1.45 parts by weight based on 100 parts by weight of Al.

### [Example 11]

To 135 g of the metallic particles G containing an organic molybdenum compound, obtained in Production Example 7, was added 465 g of propylene glycol monomethyl ether acetate to form a slurry, and 5.0 parts by weight of trifluoropropyltrimethoxysilane, which had been previously hydrolyzed by a 1 mol/L of acetic acid solution, was added based on 100 parts by weight of an aluminum metal component in the aluminum pigment composition, and stirred at 130°C for 12 hours. After the completion of the reaction, the obtained slurry was filtrated after cooling, thereby obtaining an aluminum pigment composition having a nonvolatile content of 58%. The amounts of Mo and Si contained in this aluminum pigment composition were quantitatively measured by ICP emission spectroscopy, and as a result, it was found that the amount of Mo was 0.16 parts by weight and the amount of Si was 0.50 parts by weight based on 100 parts by weight of the aluminum pigment.

### [Example 12]

To 162 g of the metallic particles H containing an organic molybdenum compound, obtained in Production Example 8, was added 558 g of ethylene glycol monobutyl ether and dispersed therein, and stirred for 1 hour while maintaining a temperature of a slurry at 40°C. Thereafter, 12.0 g of tetraethoxysilane and 6.0 g of 3-aminopropyl trimethoxysilane were added, and then 3.8 g of 25% ammonia water and 6.0 g of distilled water were further added and stirred for additional 2 hours. Thereafter, the resultant was heated to a temperature of 140°C, and stirred for 4 hours. After the completion of the reaction, the obtained slurry was filtrated after cooling, thereby obtaining an aluminum pigment composition having a nonvolatile content of 62%. The amount of each component in this aluminum pigment composition was measured in the same way as in Production Example 5, and it was found that the amount of Mo was 0.45 parts by weight and the amount of Si was 1.60 parts by weight based on 100 parts by weight of Al.

### [Example 13]

To 135 g of a commercially available aluminum paste (produced by Asahi Kasei Chemicals Corporation, trade name "GX-3100 (average particle diameter: 10.5 µm, nonvolatile content: 74%)") were added 465 g of toluene and 4.0 g of N,N-dimethylbenzylamine to form a slurry, and 2.0 parts by weight of dimethyldichlorosilane was added based on 100 parts by weight of an aluminum metal component in the aluminum pigment composition and stirred at 50°C for 18 hours. Thereafter, an N,N-dimethylethanolamine salt of molybdic acid was added so that the amount of the salt was 1.0 part by weight based on 100 parts by weight of an aluminum metal component in the aluminum paste, and stirred for 6 hours. Thereafter, the resultant was heated to a temperature of 100°C, and 5.0 parts by weight of tetraethoxysilane, which had been previously hydrolyzed by a 1 mol/L hydrochloric acid, was added thereto and stirred for 6 hours. After the completion of the reaction, the obtained slurry was filtrated after cooling, thereby obtaining an aluminum pigment composition having a nonvolatile content of 65%. The amounts of Mo and Si contained in this aluminum pigment composition were quantitatively measured by ICP emission spectroscopy, and as a result, it was found that the amount of Mo was 0.31 parts by weight and the amount of Si was 0.83 parts by weight based on 100 parts by weight of the aluminum pigment.

### [Example 14]

To 135 g of a commercially available aluminum paste (produced by Asahi Kasei Chemicals Corporation, trade name "GX-3100 (average particle diameter: 10.5 µm, nonvolatile content: 74%)") was added a triethanolamine salt of molybdic acid so that the amount of the salt was 0.5 parts by weight based on 100 parts by weight of an aluminum metal component in the aluminum paste, and also was added 5.0 parts by weight of a methoxy-modified methylphenylsilicone oligomer (produced by Shin-Etsu Chemical Co., Ltd., trade name "KR-213") and kneaded at 70°C for 12 hours to obtain an aluminum pigment composition. The amounts of Mo and Si contained in this aluminum pigment composition were quantitatively measured by ICP emission spectroscopy, and as a result, it was found that the amount of Mo was 0.12 parts by weight and the amount of Si was 0.62 parts by weight based on 100 parts by weight of the aluminum pigment.

### [Example 15]

To 135 g of the metallic particles I containing an organic molybdenum compound, obtained in Production Example 9, was added 465 g of ethylene glycol monobutyl ether to form a slurry, and 10.0 parts by weight of tetraethoxysilane was added based on 100 parts by weight of an aluminum metal component in the aluminum pigment composition. Thereafter, 1.6 parts by weight of 25% ammonia water and 2.6 parts by weight of distilled water were added thereto, and stirred at 40°C for 2 hours. Thereafter, the resultant was heated to a temperature of 140°C, and stirred for 4 hours. After the completion of the reaction, the obtained slurry was filtrated after cooling, thereby obtaining an aluminum pigment composition having a nonvolatile content of 60%. The amounts of Mo and Si contained in this aluminum pigment composition were quantitatively measured by ICP emission spectroscopy, and as a result, it was found that the amount of Mo was 0.13 parts by weight and the amount of Si was 1.01 parts by weight based on 100 parts by weight of the aluminum pigment.

### [Example 16]

To 161 g of the aluminum pigment composition obtained in Example 4 was added 700 g of mineral spirit and dispersed therein, and stirred for 30 minutes while maintaining a temperature of a slurry at 70°C. Then, 0.75 g of acrylic acid was added thereto, and stirred for 30 minutes. Thereafter, 5.6 g of trimethylolpropane triacrylate (TMPTA), 2.4 g of di-trimethylolpropane tetraacrylate (DTMPTA) and 3.0 g of 2,2'-azobis-2,4-dimethylvaleronitrile (ADVN) were dissolved in 80 g of mineral spirit, and the obtained solution was added to the slurry over 3 hours. Thereafter, the stirring was continued for additional 2 hours. After the completion of the reaction, the slurry was filtrated after cooling, thereby obtaining 193 g of an aluminum pigment composition having a nonvolatile content of 57.1%.

### [Example 17]

3.0 parts by weight of 2-ethylhexyl acid phosphate morpholine salt was added based on 100 parts by weight of an aluminum metal component in the aluminum pigment composition obtained in Example 16, and kneaded at 40°C for 2 hours to obtain an aluminum pigment composition.

### [Example 18]

To 161 g of the aluminum pigment composition obtained in Example 7 was added 600 g of mineral spirit and dispersed therein, and stirred for 30 minutes while maintaining a temperature of a slurry at 70°C. Then, 4 g of acid phosphooxy-polyoxypropylene glycol monomethacrylate dissolved in 100 g of toluene was added thereto, and stirred for 30 minutes. Thereafter, 5.6 g of trimethylolpropane triacrylate (TMPTA), 2.4 g of di-trimethylolpropane tetraacrylate (DTMPTA) and 3.0 g of 2,2'-azobis-2,4-dimethylvaleronitrile (ADVN) were dissolved in 80 g of mineral spirit, and the obtained solution was added to the slurry over 3 hours. Thereafter, the stirring was continued for additional 2 hours. After the completion of the reaction, the obtained slurry was filtrated after cooling, thereby obtaining 200 g of an aluminum pigment composition having a nonvolatile content of 55.5%.

### [Example 19]

To 159 g of the aluminum pigment composition obtained in Example 10 was added 700 g of mineral spirit and dispersed therein, and stirred for 30 minutes while maintaining a temperature of a slurry at 70°C. Thereafter, 5.6 g of TMPTA, 2.4 g of DTMPTA, 1.0 g of acryloyloxyethyl isocyanate and 3.0 g of ADVN were dissolved in 80 g of solvent naphtha, and the obtained solution was added to the slurry over 3 hours. Thereafter, the stirring was continued for additional 2 hours. After the completion of the reaction, the obtained slurry was filtrated after cooling, thereby obtaining 193 g of an aluminum pigment composition having a nonvolatile content of 56.7%.

### [Example 20]

The same procedure as in Example 16 was performed except that the aluminum pigment composition obtained in Example 4 was changed to the aluminum pigment composition obtained in Example 12, 0.75 g of acrylic acid was changed to 1.50 g of glycidyl methacrylate, and 1.0 g of divinylbenzene was added besides TMPTA and DTMPTA, thereby obtaining 202 g of an aluminum pigment composition having a nonvolatile content of 55.1%.

### [Example 21]

The same procedure as in Example 16 was performed except that the aluminum pigment composition obtained in Example 4 was changed to the aluminum pigment composition obtained in Example 15, thereby obtaining 191 g of an aluminum pigment composition having a nonvolatile content of 58.0%.

### [Comparative Example 1]

The molybdic acid-containing aluminum particles obtained in Production Examples 1, not containing a hydrolysate of a silicon-containing compound and/or a condensate thereof, was used as it is.

### [Comparative Example 2]

To 135 g of a commercially available aluminum paste (produced by Asahi Kasei Chemicals Corporation, trade name "GX-3100 (average particle diameter: 10.5 µm, nonvolatile content: 74%)") was 465 g of ethylene glycol monobutyl ether to form a slurry, and 10.0 parts by weight of tetraethoxysilane was added based on 100 parts by weight of an aluminum metal component in the aluminum pigment composition. Thereafter, 1.6 parts by weight of 25% ammonia water and 2.6 parts by weight of distilled water were added thereto, and stirred at 40°C for 2 hours. Thereafter, the resultant was heated to a temperature of 140°C, and stirred for 4 hours. After the completion of the reaction, the obtained slurry was filtrated after cooling, thereby obtaining an aluminum pigment composition having a nonvolatile content of 60%. The amounts of Mo and Si contained in this aluminum pigment composition were quantitatively measured by ICP emission spectroscopy, and as a result, it was found that the amount of Mo was 0.00 parts by weight and the amount of Si was 0.40 parts by weight based on 100 parts by weight of the aluminum pigment.

### [Comparative Example 3]

The same procedure as in Production Example 1 was performed except that phosphomolybdic acid was added instead of the monooctylamine salt of molybdic acid so that the amount thereof was 0.3 parts by weight based on 100 parts by weight of an aluminum metal component, thereby obtaining metallic particles K containing an inorganic molybdenum compound. The same procedure as in Example 1 was performed except that the metallic particles K containing an inorganic molybdenum compound was used instead of the metallic particles A described in Example 1, thereby obtaining an aluminum pigment composition having a nonvolatile content of 60%. The amounts of Mo and Si contained in this aluminum pigment composition were quantitatively measured by ICP emission spectroscopy, and as a result, it was found that the amount of Mo was 0.15 parts by weight and the amount of Si was 1.0 part by weight based on 100 parts by weight of the aluminum pigment.

### [Comparative Example 4]

A commercially available aluminum paste (produced by Asahi Kasei Chemicals Corporation, trade name "GX-3100 (average particle diameter: 10.5 µm, nonvolatile content: 74%)") was used as it is.

### [Examples 22 to 42], [Comparative Examples 5 to 8]

With respect to the aluminum pigment compositions obtained in Examples 1 to 21, and the aluminum pigment compositions obtained in Comparative Examples 1 to 4, water-based metallic coatings each having the following composition were prepared. Herein, the results thereof were defined as Examples 22 to 42 and Comparative Examples 5 to 8.

### [Preparation of Water-based Metallic Coatings]

Water-based metallic coatings each having the following components were prepared.
Aluminum pigment composition: 10.5 g as an aluminum content
Diethylene glycol monobutyl ether: 6.8 g
Polyoxyethylene lauryl ether (non-ionic surfactant)
(produced by Matsumoto Yushi-Seiyaku Co., Ltd., trade name "Actinol L5"): 2.1 g
Distilled water: 42 g
Water-soluble acrylic resin
(produced by Origin Electric Co., Ltd., trade name "Water-type Plameez #200"): 175 g
Thickening agent (produced by Kyoeisha Chemical Co., Ltd., trade name "Thixol K-130B"): 5.0 g

The prepared water-based metallic coatings were used to perform the following evaluations.

### [Evaluation 1 (Coating Stability)]

The coatings prepared by the above formulation were visually evaluated in terms of changes in state after being left to stand at 23°C for 24 hours.
○: no change was particularly observed.
Δ: aggregation of aluminum pigments was slightly observed.
×: aggregation of aluminum pigments was observed.

### [Evaluation 2 (Storage Stability (Gas Generation) Evaluation)]

Each water-based metallic coating (200 g) was taken in a flask, the flask was placed in a constant temperature water bath at 40°C, and the cumulative amount of hydrogen gas generated was observed until the elapse of 168 hours. The following criteria were used to evaluate the amount of the gas generated, and were assumed to be an index of storage stability in each coating.
⊚: 0 ml in the range of experimental error (± about 0.5 ml)
○: less than 1.0 ml
Δ: 1.0 ml or more and less than 5.0 ml
×: 5.0 ml or more and less than 20 ml
××: 20ml or more

### [Evaluation 3 (Coating Film Color Tone Evaluation)]

The above coatings were used to form coating films, and each film was evaluated for brightness and flip-flop feeling.

### Brightness

Brightness was evaluated by using a laser-type metallic feeling measuring apparatus manufactured by Kansai Paint Co., Ltd., Alcope LMR-200. The apparatus includes a laser light source having an incident angle of 45 degrees, a light receiver having an acceptance angle of 0 degrees and a light receiver having an acceptance angle of-35 degrees as optical conditions. With respect to a measurement value, an IV value was determined at an acceptance angle of -35 degrees, where the maximum intensity of light is obtained, in the reflected laser light subtracted by the light in the specular reflection region where the laser light is reflected on the surface of the coating film. The IV value is a parameter which is proportional to the intensity of regularly reflected light from the coating film, and indicates the magnitude of brightness of light. The judging criteria are as follows.
⊚: higher than Comparative Example 5 by 20 or more
○: difference from Comparative Example 5 being +10 to 20
Δ: difference from Comparative Example 5 being less than ±10
×: lower than Comparative Example 5 by 10 or more

### Flip-Flop Feeling (FF)

Flip-flop feeling was evaluated by using a variable angle color meter manufactured by Suga Test Instruments Co., Ltd. An F/F value was determined from the slopes of the logarithms of the reflected light intensities (L values) at observation angles (acceptance angles) of 30 degrees and 80 degrees against a light source having an incident angle of 45 degrees. The F/F value is a parameter which is proportional to the orientation degree of a metallic pigment, and indicates the magnitude of the flip-flop feeling of the pigment. The judging criteria are as follows.
⊚: higher than Comparative Example 5 by 0.1 or more
○: difference from Comparative Example 5 being +0.05 to 0.1
Δ: difference from Comparative Example 5 being less than ±0.05
×: lower than Comparative Example 5 by 0.05 or more

### Hiding power

Coating films each applied on a PET sheet were visually judged.
○: more excellent than standard
×: equal to or less excellent than standard

### [Evaluation 4 (Evaluation of Discoloration Resistance of Dye)]

To 5 g of each aluminum pigment composition was added 20 ml of an aqueous methylene blue solution (0.04 mmol/L), and warmed at 40°C for 24 hours. Then, this solution was filtrated and the decoloration degree of blue color was evaluated.
○: no significant decoloration was observed.
×: decoloration was observed.

The results of Evaluations 1 to 4 are shown in Table 1.

**[Table 1]**

| | Pigment composition used | Evaluation 1 | Evaluation 2 | Evaluation 3 | | | Evaluation 4 |
|---|---|---|---|---|---|---|---|
| | | Coating stability | Storage stability | Brightness | FF | Hiding power | Discoloration resistance of dye |
| Example 22 | Example 1 | ○ | ○ | ⊚ | ⊚ | ○ | ○ |
| Example 23 | Example 2 | ○ | ⊚ | ⊚ | ⊚ | ○ | ○ |
| Example 24 | Example 3 | ○ | ○ | ○ | ○ | ○ | ○ |
| Example 25 | Example 4 | ○ | ⊚ | ⊚ | ⊚ | ○ | ○ |
| Example 26 | Example 5 | ○ | ⊚ | ⊚ | ⊚ | ○ | ○ |
| Example 27 | Example 6 | ○ | ○ | ○ | ⊚ | ○ | ○ |
| Example 28 | Example 7 | ○ | ⊚ | ⊚ | ○ | ○ | ○ |
| Example 29 | Example 8 | ○ | ⊚ | ⊚ | ⊚ | ○ | ○ |
| Example 30 | Example 9 | ○ | ○ | ⊚ | ⊚ | ○ | ○ |
| Example 31 | Example 10 | ○ | ⊚ | ○ | ⊚ | ○ | ○ |
| Example 32 | Example 11 | ○ | ○ | ○ | ⊚ | ○ | ○ |
| Example 33 | Example 12 | ○ | ○ | ○ | ○ | ○ | ○ |
| Example 34 | Example 13 | ○ | ○ | ○ | ⊚ | ○ | ○ |
| Example 35 | Example 14 | ○ | ○ | ○ | ⊚ | ○ | ○ |
| Example 36 | Example 15 | ○ | ⊚ | ⊚ | ⊚ | ○ | ○ |
| Example 37 | Example 16 | ○ | ⊚ | ○ | ○ | ○ | ○ |
| Example 38 | Example 17 | ○ | ⊚ | ○ | ○ | ○ | ○ |
| Example 39 | Example 18 | ○ | ⊚ | ⊚ | ○ | ○ | ○ |
| Example 40 | Example 19 | ○ | ⊚ | Δ | ○ | ○ | ○ |
| Example 41 | Example 20 | ○ | ⊚ | ○ | ○ | ○ | ○ |
| Example 42 | Example 21 | ○ | ⊚ | ⊚ | ○ | ○ | ○ |
| Comparative Example 5 | Comparative Example 1 | Δ | × | 355 | 1.62 | Standard | × |
| Comparative Example 6 | Comparative Example 2 | Δ | × | Δ | Δ | ○ | ○ |
| Comparative Example 7 | Comparative Example 3 | Δ | Δ | × | × | × | × |
| Comparative Example 8 | Comparative Example 4 | × | ×× | Δ | Δ | O | O |

### [Examples 43 to 48], [Comparative Example 9] (Example 46 is a reference example)

With respect to the aluminum pigment compositions containing an organic oligomer or polymer, obtained in Examples 16 to 21, the following adhesion and chemical resistance tests were performed. Herein, the results thereof were defined as Examples 43 to 48 and Comparative Example 9.

### [Preparation of Metallic Coating]

Metallic coatings each having the following components were prepared.
Aluminum pigment composition: 5 g as a nonvolatile content
Thinner (produced by Musashi Paint Co., Ltd., trade name "Pla Ace thinner No. 2726"): 50 g
Acrylic resin (produced by Musashi Paint Co., Ltd., trade name "Pla Ace No. 7160"): 33 g

### [Evaluation]

An ABS resin plate was coated with each prepared metallic coating by using an air-spray apparatus so that the thickness of a film to be dried was 10 µm, and dried in an oven at 60°C for 30 minutes to obtain a coated plate for evaluation.

The coated plate for evaluation was used to perform the following evaluation.

### [Evaluation 5 (Adhesion)]

Cellotape (registered trademark, manufactured by Nichiban Co., Ltd., CT-24) was adhered to the coating film on the coated plate for evaluation and pulled at an angle of 45 degrees, and the degree of the aluminum pigment particles peeled was visually observed. The judging criteria are as follows.
○: no peeling
Δ: slightly peeling
×: peeling

### [Evaluation 6 (Chemical Resistance)]

The lower half of the coated plate for evaluation was immersed in a beaker into which an aqueous 0.1 N-NaOH solution was loaded, and left to stand at 55°C for 4 hours. The coated plate after testing was washed with water and dried, and then colors of the immersed portion and the unimmersed portion were measured under Condition d (8-d method) of JIS-Z-8722 (1982) to determine color difference ΔE according to 6.3.2 of JIS-Z-8730 (1980). The judging was as follows depending on values of color difference ΔE. (The smaller values are more favorable.)
○: less than 1.0
×: 1.0 or more

The results are shown in Table 2.

**[Table 2]**

| | Pigment composition used | Evaluation 5 | Evaluation 6 |
|---|---|---|---|
| | | Adhesion | Chemical resistance |
| Example 43 | Example 16 | ○ | ○ |
| Example 44 | Example 17 | ○ | ○ |
| Example 45 | Example 18 | ○ | ○ |
| Example 46* | Example 19 | ○ | ○ |
| Example 47 | Example 20 | ○ | ○ |
| Example 48 | Example 21 | ○ | ○ |
| Comparative Example 9 | Comparative Example 1 | × | × |

| | | | |
|---|---|---|---|
| * reference example | | | |

### Industrial Applicability

The present invention can provide a metallic pigment composition that can be used in coating compositions, ink compositions or the like, in particular, water-based coatings, water-based inks or the like, that is excellent in storage stability of coatings, that is excellent in photoluminescence, hiding power, flip-flop feeling and the like when being formed into a coating film, and that is excellent also in discoloration resistance of dye and organic pigment.

## Claims

1. A metallic pigment composition comprising one or more organic molybdenum compounds, a hydrolysate of a silicon-containing compound and/or a condensate thereof, and metallic particles, and-further comprising at least one selected from the group consisting of:
(i) an organic oligomer or polymer obtained by polymerizing
(a) at least one selected from the group consisting of radical and/or ionic polymerizable unsaturated carboxylic acid; a compound having a radical and/or ionic polymerizable double bond and an isocyanate group; a compound having a radical and/or ionic polymerizable double bond and an epoxy group; a compound having a radical and/or ionic polymerizable double bond and an amino group; a compound having a radical and/or ionic polymerizable double bond and a hydrolyzable silyl group; a compound having a radical and/or ionic polymerizable double bond and a sulfone group; a compound having a radical and/or ionic polymerizable double bond and a hydroxyl group with
(b) at least one monomer having at least two radical and/or ionic polymerizable double bonds in one molecule; and
(ii) inorganic phosphoric acids or salts thereof,
wherein the silicon-containing compound is at least one selected from compounds represented by the following general formula (4), (6) or (7):
[Formula 4]
R6ₘSi(OR7)₄₋ₘ (4)
wherein R6 is a hydrogen atom or a hydrocarbon group having 1 to 30 carbon atoms that may optionally contain a halogen group, and R7 is a hydrogen atom or a hydrocarbon group having 1 to 8 carbon atoms, R6 and R7 may be the same or different, wherein when the numbers of R6 and R7 are each two or more, each of R6 and R7 may be all the same, may be partially the same, or may be all different, and 1 ≤ m ≤ 3;
[Formula 6]
Si(OR11)₄ (6)
wherein R11 is each a hydrogen atom or a hydrocarbon group having 1 to 8 carbon atoms, and R11 may be all the same, may be partially the same, or may be all different; and
[Formula 7]
R12ᵣSiCl₄₋ᵣ (7)
wherein R12 is a hydrogen atom or a hydrocarbon group having 1 to 30 carbon atoms that may optionally contain a halogen group, wherein when the number of R12 is two or more, R12 may be all the same, may be partially the same, or may be all different, and 0 ≤ r ≤ 3.

2. The metallic pigment composition according to claim 1, wherein the metallic particles are made of aluminum.

3. The metallic pigment composition according to claim 1 or 2, wherein the organic molybdenum compound is at least one selected from organic amine salts of molybdic acid, compounds represented by the following general formula (1), and compounds represented by the following general formula (2): 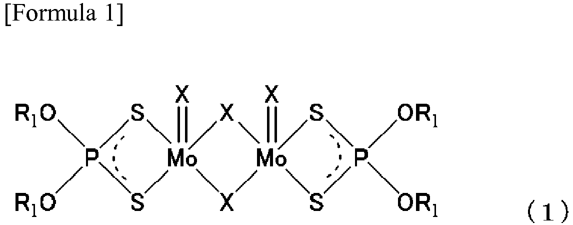 wherein R1 is each an organic group having 1 to 24 carbon atoms and may be the same or different, and X is S or O; and 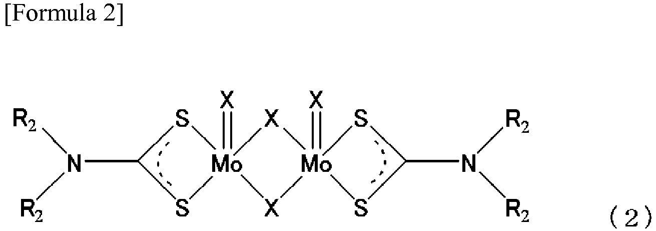 wherein R2 is each an organic group having 1 to 24 carbon atoms and may be the same or different, and X is S or O.

4. The metallic pigment composition according to claim 3, wherein an amine in the organic amine salt of molybdic acid is at least one selected from amine compounds represented by the following general formula (3): 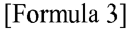 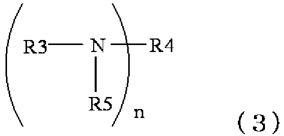 wherein R3, R4 and R5 may be the same or different, and are each a hydrogen atom, or a mono or divalent hydrocarbon group having 1 to 30 carbon atoms that may optionally contain an ether bond, an ester bond, a hydroxyl group, a carbonyl group, and a thiol group, wherein R3 and R4 are optionally taken together to form a 5-membered or 6-membered cycloalkyl group, R3 and R4 are optionally taken together with a nitrogen atom to form a 5-membered or 6-membered ring that is capable of additionally containing a nitrogen or oxygen atom as a crosslinking member, or R3, R4 and R5 are optionally taken together to form a multi-membered multiring that is capable of containing one or more additional nitrogen atoms and/or oxygen atoms as a crosslinking member, R3, R4 and R5 are not a hydrogen atom at the same time, and n represents a numerical value of 1 to 2.

5. The metallic pigment composition according to any one of claims 1 to 4, wherein the inorganic phosphoric acids are at least one selected from orthophosphoric acids, metaphosphoric acids, pyrophosphoric acids, triphosphoric acids, tetraphosphoric acids, and phosphorous acids.

6. The metallic pigment composition according to any one of claims 1 to 4, wherein the inorganic phosphoric acid salts are salts of the inorganic phosphoric acids with at least one selected from alkali metals, alkaline earth metals, ammonia, and amines represented by the following general formula (8): 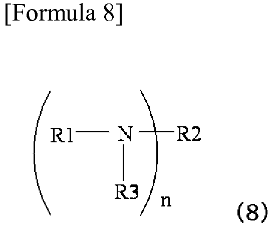 wherein R1, R2 and R3 may be the same or different, and are each a hydrogen atom, or a mono or divalent hydrocarbon group having 1 to 30 carbon atoms that may optionally contain an ether bond, an ester bond, a hydroxyl group, a carbonyl group, and a thiol group, wherein R1 and R2 are optionally taken together to form a 5-membered or 6-membered cycloalkyl group, R1 and R2 are optionally taken together with a nitrogen atom to form a 5-membered or 6-membered ring that is capable of additionally containing a nitrogen or oxygen atom as a crosslinking member, or R1, R2 and R3 are optionally taken together to form a multi-membered multiring that is capable of containing one or more additional nitrogen atoms and/or oxygen atoms as a crosslinking member, R1, R2 and R3 are not a hydrogen atom at the same time, and n represents a numerical value of 1 to 2.

7. The metallic pigment composition according to any one of claims 1 to 6, wherein the organic molybdenum compound is present in an amount of 0.01 to 10 parts by weight based on 100 parts by weight of the metallic particles.

8. The metallic pigment composition according to any one of claims 1 to 7, wherein the hydrolysate of a silicon-containing compound and/or the condensate thereof is present in an amount of 0.01 to 50 parts by weight based on 100 parts by weight of the metallic particles.

9. The metallic pigment composition according to any one of claims 1 to 8, wherein the organic oligomer or polymer is present in an amount of 0.01 to 50 parts by weight based on 100 parts by weight of the metallic particles.

10. A coating composition comprising the metallic pigment composition according to any one of claims 1 to 9.

11. An ink composition comprising the metallic pigment composition according to any one of claims 1 to 9.

12. An article comprising a coating film formed by the coating composition according to claim 10 or being coated with the coating composition according to claim 10.

13. A printed material formed by the ink composition according to claim 11.

## Patentansprüche

1. Metallische Pigmentzusammensetzung, umfassend eine oder mehrere organische Molybdänverbindungen, ein Hydrolysat einer siliziumhaltigen Verbindung und/oder eines Kondensats davon und metallische Partikel, und ferner umfassend mindestens ein Mitglied, das aus der folgenden Gruppe ausgewählt ist:
(i) ein organisches Oligomer oder Polymer, erhalten durch Polymerisation
(a) mindestens einer Verbindung, ausgewählt aus der Gruppe bestehend aus einer radikalisch und/oder ionisch polymerisierbaren ungesättigten Carbonsäure; einer Verbindung mit einer radikalisch und/oder ionisch polymerisierbaren Doppelbindung und einer Isocyanatgruppe; einer Verbindung mit einer radikalisch und/oder ionisch polymerisierbaren Doppelbindung und einer Epoxygruppe; einer Verbindung mit einer radikalisch und/oder ionisch polymerisierbaren Doppelbindung und einer Aminogruppe; einer Verbindung mit einer radikalisch und/oder ionisch polymerisierbaren Doppelbindung und einer hydrolysierbaren Silylgruppe; einer Verbindung mit einer radikalisch und/oder ionisch polymerisierbaren Doppelbindung und einer Sulfongruppe; einer Verbindung mit einer radikalisch und/oder ionisch polymerisierbaren Doppelbindung und einer Hydroxylgruppe mit
(b) mindestens einem Monomer mit mindestens zwei radikalisch und/oder ionisch polymerisierbaren Doppelbindungen in einem Molekül; und
(ii) anorganische Phosphorsäuren oder Salze davon,
wobei die siliziumhaltige Verbindung mindestens eine ist, die aus Verbindungen der folgenden allgemeinen Formeln (4), (6) oder (7) ausgewählt ist:
[Formel 4]
R6ₘSi(OR7)₄₋ₘ (4)
wobei R6 ein Wasserstoffatom oder eine Kohlenwasserstoffgruppe mit 1 bis 30 Kohlenstoffatomen ist, die gegebenenfalls eine Halogengruppe enthalten kann, und R7 ein Wasserstoffatom oder eine Kohlenwasserstoffgruppe mit 1 bis 8 Kohlenstoffatomen ist, R6 und R7 gleich oder verschieden sein können, wobei, wenn die Anzahl von R6 und R7 jeweils zwei oder mehr ist, jeder von R6 und R7 gleich, teilweise gleich oder alle verschieden sein kann, und 1≤ m ≤ 3;
[Formel 6]
Si(OR11)₄ (6)
wobei R11 jeweils ein Wasserstoffatom oder eine Kohlenwasserstoffgruppe mit 1 bis 8 Kohlenstoffatomen ist und R11 alle gleich, teilweise gleich oder alle verschieden sein können; und
[Formel 7]
R12ᵣSiCl₄₋ᵣ (7)
wobei R12 ein Wasserstoffatom oder eine Kohlenwasserstoffgruppe mit 1 bis 30 Kohlenstoffatomen ist, die gegebenenfalls eine Halogengruppe enthalten kann, wobei, wenn die Anzahl von R12 zwei oder mehr ist, R12 alle gleich, teilweise gleich oder alle verschieden sein können, und 0 ≤ r ≤ 3.

2. Metallpigmentzusammensetzung nach Anspruch 1, worin die Metallpartikel aus Aluminium hergestellt sind.

3. Metallische Pigmentzusammensetzung nach Anspruch 1 oder 2, worin die organische Molybdänverbindung mindestens eine ist, die unter organischen Aminsalzen von Molybdänsäure, Verbindungen der folgenden allgemeinen Formel (1) und Verbindungen der folgenden allgemeinen Formel (2) ausgewählt ist: 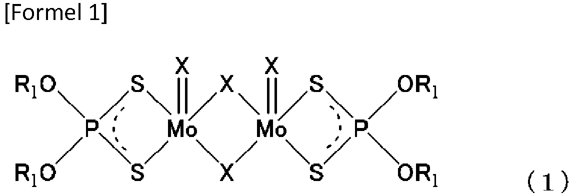 wobei R1 jeweils eine organische Gruppe mit 1 bis 24 Kohlenstoffatomen ist und gleich oder verschieden sein kann, und X S oder O ist; und 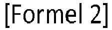 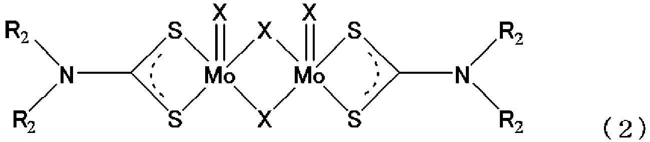 wobei R2 jeweils eine organische Gruppe mit 1 bis 24 Kohlenstoffatomen ist und gleich oder verschieden sein kann, und X S oder O ist.

4. Metallpigmentzusammensetzung nach Anspruch 3, worin ein Amin im organischen Aminsalz der Molybdänsäure mindestens eines ist, das aus Aminverbindungen der folgenden allgemeinen Formel (3) ausgewählt ist: 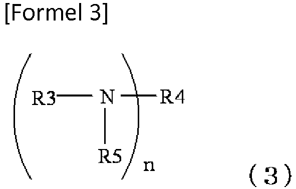 wobei R3, R4 und R5 gleich oder verschieden sein können und jeweils ein Wasserstoffatom oder eine ein- oder zweiwertige Kohlenwasserstoffgruppe mit 1 bis 30 Kohlenstoffatomen sind, die gegebenenfalls eine Etherbindung, eine Esterbindung, eine Hydroxylgruppe, eine Carbonylgruppe und eine Thiolgruppe enthalten kann, wobei R3 und R4 gegebenenfalls zusammen einen 5-gliedrige oder 6-gliedrige Cycloalkylgruppe bilden, R3 und R4 gegebenenfalls zusammen mit einem Stickstoffatom einen 5-gliedrigen oder 6-gliedrigen Ring bilden, der zusätzlich ein Stickstoff- oder Sauerstoffatom als Vernetzungselement enthalten kann, oder R3, R4 und R5 gegebenenfalls zusammen einen mehrgliedrigen Multiring bilden, der ein oder mehrere zusätzliche Stickstoffatome und/oder Sauerstoffatome als Vernetzungselement enthalten kann, wobei R3, R4 und R5 nicht gleichzeitig ein Wasserstoffatom sind, und wobei n einen Zahlenwert von 1 bis 2 darstellt.

5. Metallische Pigmentzusammensetzung nach einem der Ansprüche 1 bis 4, worin die anorganischen Phosphorsäuren mindestens eine ist/sind, die unter Orthophosphorsäuren, Metaphosphorsäuren, Pyrophosphorsäuren, Triphosphorsäuren, Tetraphosphorsäuren und phosphoriger Säure ausgewählt sind.

6. Metallische Pigmentzusammensetzung nach einem der Ansprüche 1 bis 4, worin die anorganischen Phosphorsäuresalze Salze der anorganischen Phosphorsäuren mit mindestens einem Mitglied sind, das aus Alkalimetallen, Erdalkalimetallen, Ammoniak und Aminen der folgenden allgemeinen Formel (8) ausgewählt ist: 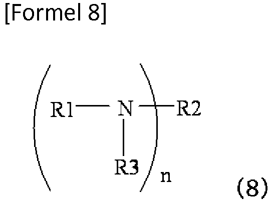 wobei R1, R2 und R3 gleich oder verschieden sein können und jeweils ein Wasserstoffatom oder eine ein- oder zweiwertige Kohlenwasserstoffgruppe mit 1 bis 30 Kohlenstoffatomen sind, die gegebenenfalls eine Etherbindung, eine Esterbindung, eine Hydroxylgruppe, eine Carbonylgruppe und eine Thiolgruppe enthalten kann, wobei R1 und R2 gegebenenfalls zusammen eine 5-gliedrige oder 6-gliedrige Cycloalkylgruppe bilden, R1 und R2 gegebenenfalls zusammen mit einem Stickstoffatom zu einem 5-gliedrigen oder 6-gliedrigen Ring bilden, der zusätzlich ein Stickstoff- oder Sauerstoffatom als Vernetzungselement enthalten kann, oder R1, R2 und R3 gegebenenfalls zusammen einen mehrgliedrigen Multiring bilden, der ein oder mehrere zusätzliche Stickstoffatome und/oder Sauerstoffatome als Vernetzungselement enthalten kann, wobei R1, R2 und R3 nicht gleichzeitig ein Wasserstoffatom sind, und wobei n einen Zahlenwert von 1 bis 2 darstellt.

7. Metallische Pigmentzusammensetzung nach einem der Ansprüche 1 bis 6, worin die organische Molybdänverbindung in einer Menge von 0,01 bis 10 Gewichtsteilen, bezogen auf 100 Gewichtsteile der metallischen Partikel, vorhanden ist.

8. Metallische Pigmentzusammensetzung nach einem der Ansprüche 1 bis 7, worin das Hydrolysat einer siliziumhaltigen Verbindung und/oder das Kondensat davon in einer Menge von 0,01 bis 50 Gewichtsteilen, bezogen auf 100 Gewichtsteile der metallischen Partikel, vorhanden ist.

9. Metallische Pigmentzusammensetzung nach einem der Ansprüche 1 bis 8, worin das organische Oligomer oder Polymer in einer Menge von 0,01 bis 50 Gewichtsteilen, bezogen auf 100 Gewichtsteile der metallischen Partikel, vorhanden ist.

10. Beschichtungszusammensetzung, umfassend die metallische Pigmentzusammensetzung nach einem der Ansprüche 1 bis 9.

11. Tinten- bzw. Druckfarbenzusammensetzung, umfassend die metallische Pigmentzusammensetzung nach einem der Ansprüche 1 bis 9.

12. Gegenstand, umfassend einen Beschichtungsfilm, der durch die Beschichtungszusammensetzung nach Anspruch 10 gebildet ist oder mit der Beschichtungszusammensetzung nach Anspruch 10 beschichtet ist.

13. Druckerzeugnis, das durch die Tinten- bzw. Druckfarbenzusammensetzung nach Anspruch 11 gebildet wurde.

## Revendications

1. Composition de pigments métalliques comprenant un ou plusieurs composés organiques du molybdène, un hydrolysat d'un composé contenant du silicium et/ou un condensat de celui-ci, et des particules métalliques, et comprenant en outre au moins un choisi dans le groupe constitué de :
(i) un oligomère ou polymère organique obtenu par polymérisation
(a) au moins un choisi dans le groupe constitué d'un acide carboxylique insaturé polymérisable radicalaire et/ou ionique ; d'un composé comportant une double liaison polymérisable radicalaire et/ou ionique et un groupe isocyanate ; d'un composé comportant une double liaison polymérisable radicalaire et/ou ionique et un groupe époxy ; d'un composé comportant une double liaison polymérisable radicalaire et/ou ionique et un groupe amino ; d'un composé comportant une double liaison polymérisable radicalaire et/ou ionique et un groupe silyle hydrolysable ; d'un composé comportant une double liaison polymérisable radicalaire et/ou ionique et un groupe sulfone ; d'un composé comportant une double liaison polymérisable radicalaire et/ou ionique et un groupe hydroxyle avec
(b) au moins un monomère comportant au moins deux doubles liaisons polymérisables radicalaires et/ou ioniques par molécule ; et
(ii) des acides phosphoriques inorganiques ou des sels de ceux-ci,
dans laquelle le composé contenant du silicium est au moins un choisi parmi les composés représentés par la formule générale (4), (6) ou (7) suivante :
[Formule 4]
R6ₘSi(OR7)₄₋ₘ (4)
dans laquelle R6 est un atome d'hydrogène ou un groupe hydrocarbure comportant de 1 à 30 atomes de carbone qui peut facultativement contenir un groupe halogéné, et R7 est un atome d'hydrogène ou un groupe hydrocarbure comportant de 1 à 8 atomes de carbone, R6 et R7 peuvent être identiques ou différents, dans laquelle lorsque les nombres de R6 et R7 sont chacun de deux ou plus, chacun des R6 et R7 peuvent être tous identiques, peuvent être partiellement identiques, ou peuvent être tous différents, et 1 ≤ m ≤ 3 ;
[Formule 6]
S**i**(OR11)₄ (6)
dans laquelle R11 est chacun un atome d'hydrogène ou un groupe hydrocarbure comportant de 1 à 8 atomes de carbone, et les R11 peuvent être tous identiques, peuvent être partiellement identiques, ou peuvent être tous différents ; et
[Formule 7]
R12ᵣSiCl₄₋ᵣ (7)
dans laquelle R12 est un atome d'hydrogène ou un groupe hydrocarbure comportant de 1 à 30 atomes de carbone qui peut facultativement contenir un groupe halogéné, dans laquelle lorsque le nombre de R12 est de deux ou plus, les R12 peuvent être tous identiques, peuvent être partiellement identiques, ou peuvent être tous différents, et 0 ≤ r ≤ 3.

2. Composition de pigments métalliques selon la revendication 1, dans laquelle les particules métalliques sont faites d'aluminium.

3. Composition de pigments métalliques selon la revendication 1 ou 2, dans laquelle le composé organique du molybdène est au moins un choisi parmi les sels aminés organiques d'acide molybdique, les composés représentés par la formule générale (1) suivante, et les composés représentés par la formule générale (2) suivante : 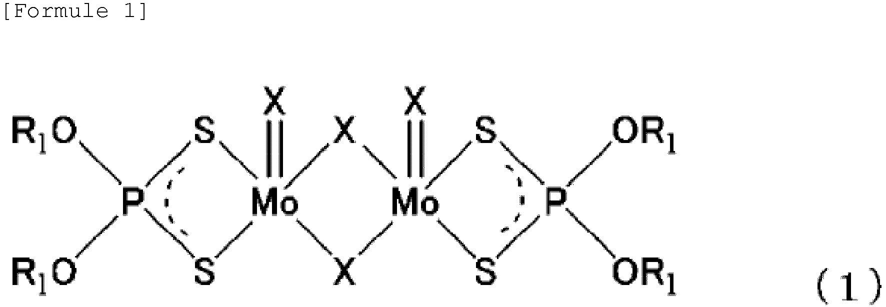 dans laquelle R1 est chacun un groupe organique comportant de 1 à 24 atomes de carbone et les R1 peuvent être identiques ou différents, et X est S ou O ; et 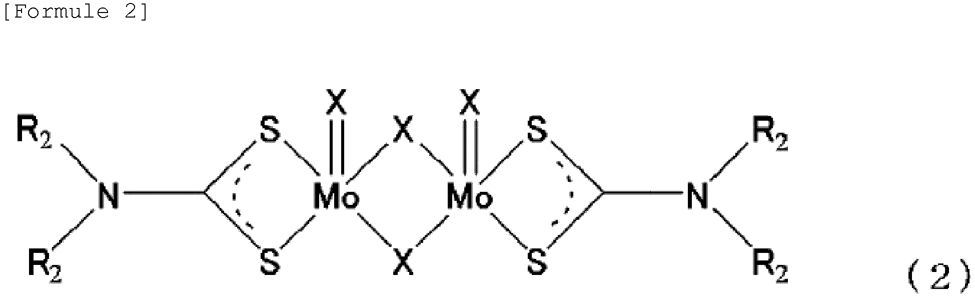 dans laquelle R2 est chacun un groupe organique comportant de 1 à 24 atomes de carbone et les R2 peuvent être identiques ou différents, et X est S ou O.

4. Composition de pigments métalliques selon la revendication 3, dans laquelle une amine dans le sel aminé organique d'acide molybdique est au moins une choisie parmi les composés aminés représentés par la formule générale (3) suivante : 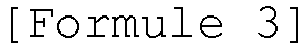 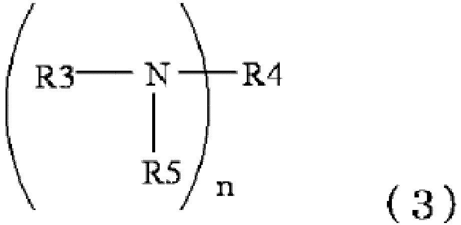 dans laquelle R3, R4 et R5 peuvent être identiques ou différents, et sont chacun un atome d'hydrogène, ou un groupe hydrocarbure mono ou divalent comportant de 1 à 30 atomes de carbone qui peut facultativement contenir une liaison éther, une liaison ester, un groupe hydroxyle, un groupe carbonyle et un groupe thiol, dans laquelle R3 et R4 sont facultativement pris ensemble pour former un groupe cycloalkyle à 5 chaînons ou à 6 chaînons, R3 et R4 sont facultativement pris ensemble avec un atome d'azote pour former un cycle à 5 chaînons ou à 6 chaînons qui est capable de contenir également un atome d'azote ou d'oxygène en tant qu'élément de réticulation, ou R3, R4 et R5 sont facultativement pris ensemble pour former un multicycle à plusieurs chaînons qui est capable de contenir un ou plusieurs atomes d'azote et/ou atomes d'oxygène supplémentaires en tant qu'élément de réticulation, R3, R4 et R5 ne sont pas un atome d'hydrogène en même temps, et n représente une valeur numérique de 1 à 2.

5. Composition de pigments métalliques selon l'une quelconque des revendications 1 à 4, dans laquelle les acides phosphoriques inorganiques sont au moins un choisi parmi les acides orthophosphoriques, les acides métaphosphoriques, les acides pyrophosphoriques, les acides triphosphoriques, les acides tétraphosphoriques et les acides phosphoreux.

6. Composition de pigments métalliques selon l'une quelconque des revendications 1 à 4, dans laquelle les sels d'acides phosphoriques inorganiques sont des sels des acides phosphoriques inorganiques avec au moins un choisi parmi les métaux alcalins, les métaux alcalino-terreux, l'ammoniaque et les amines représentées par la formule générale (8) suivante : 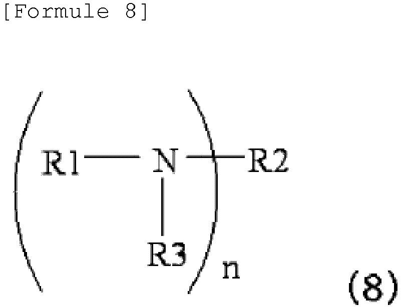 dans laquelle R1, R2 et R3 peuvent être identiques ou différents, et sont chacun un atome d'hydrogène, ou un groupe hydrocarbure mono ou divalent comportant de 1 à 30 atomes de carbone qui peut facultativement contenir une liaison éther, une liaison ester, un groupe hydroxyle, un groupe carbonyle et un groupe thiol, dans laquelle R1 et R2 sont facultativement pris ensemble pour former un groupe cycloalkyle à 5 chaînons ou à 6 chaînons, R1 et R2 sont facultativement pris ensemble avec un atome d'azote pour former un cycle à 5 chaînons ou à 6 chaînons qui est capable de contenir également un atome d'azote ou d'oxygène en tant qu'élément de réticulation, ou R1, R2 et R3 sont facultativement pris ensemble pour former un multicycle à plusieurs chaînons qui est capable de contenir un ou plusieurs atomes d'azote et/ou atomes d'oxygène supplémentaires en tant qu'élément de réticulation, R1, R2 et R3 ne sont pas un atome d'hydrogène en même temps, et n représente une valeur numérique de 1 à 2.

7. Composition de pigments métalliques selon l'une quelconque des revendications 1 à 6, dans laquelle le composé organique du molybdène est présent en une quantité de 0,01 à 10 parties en poids sur la base de 100 parties en poids des particules métalliques.

8. Composition de pigments métalliques selon l'une quelconque des revendications 1 à 7, dans laquelle l'hydrolysat d'un composé contenant du silicium et/ou le condensat de celui-ci est présent en une quantité de 0,01 à 50 parties en poids sur la base de 100 parties en poids des particules métalliques.

9. Composition de pigments métalliques selon l'une quelconque des revendications 1 à 8, dans laquelle l'oligomère ou le polymère organique est présent en une quantité de 0,01 à 50 parties en poids sur la base de 100 parties en poids des particules métalliques.

10. Composition de revêtement comprenant la composition de pigments métalliques selon l'une quelconque des revendications 1 à 9.

11. Composition d'encre comprenant la composition de pigments métalliques selon l'une quelconque des revendications 1 à 9.

12. Article comprenant un film de revêtement formé par la composition de revêtement selon la revendication 10 ou étant revêtu de la composition de revêtement selon la revendication 10.

13. Matériau imprimé formé par la composition d'encre selon la revendication 11.
